(19) Europäisches Patentamt / European Patent Office / Office européen des brevets

(11) **EP 4 004 509 B1**

(12) **EUROPEAN PATENT SPECIFICATION**

(45) Date of publication and mention
of the grant of the patent:
**29.01.2025  Bulletin 2025/05**

(21) Application number: **20846630.0**

(22) Date of filing: **29.07.2020**

(51) International Patent Classification (IPC):
**G01K 7/32** *(2006.01)*      **G01K 15/00** *(2006.01)*

(52) Cooperative Patent Classification (CPC):
**G01K 15/005; G01K 7/32**

(86) International application number:
**PCT/IL2020/050840**

(87) International publication number:
**WO 2021/019539 (04.02.2021 Gazette 2021/05)**

(54) **ON-DIE THERMAL SENSING NETWORK FOR INTEGRATED CIRCUITS**

THERMISCHES ABTASTNETZWERK AUF EINEM CHIP FÜR INTEGRIERTE SCHALTUNGEN

RÉSEAU DE DÉTECTION THERMIQUE SUR PUCE POUR CIRCUITS INTÉGRÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2019  US 201962879625 P**

(43) Date of publication of application:
**01.06.2022  Bulletin 2022/22**

(73) Proprietor: **PROTEANTECS LTD.**
**3303254 Haifa (IL)**

(72) Inventors:
• **FAYNEH, Eyal**
  **5322001 Givatayim (IL)**
• **REDLER, Guy**
  **3452209 Haifa (IL)**
• **LANDMAN, Evelyn**
  **3491795 Haifa (IL)**
• **WEINTROB, Inbar**
  **3780800 Givat-Ada (IL)**
• **DAVID, Yahel**
  **1934000 Kibbutz Gazit (IL)**
• **TANASRA, Faten**
  **1604557 Nazareth (IL)**

(74) Representative: **Boult Wade Tennant LLP**
**Salisbury Square House**
**8 Salisbury Square**
**London EC4Y 8AP (GB)**

(56) References cited:
WO-A1-2019/135247      US-A- 5 895 629
US-A1- 2011 102 091      US-A1- 2017 199 089
US-A1- 2017 199 089      US-B1- 6 948 388
US-B1- 7 038 483          US-B2- 7 455 450

Processed by Luminess, 75001 PARIS (FR)

**Description**

**CROSS-REFERENCE TO RELATED APPLICATIONS**

This application claims priority to U.S. Provisional Patent Application No. 62/879,625, filed July 29, 2019, and entitled "Integrated Circuit Temperature Sensor".

**FIELD OF THE INVENTION**

The invention relates to the field of integrated circuits.

**BACKGROUND**

Integrated circuits (ICs) may include analog and digital electronic circuits on a flat semiconductor substrate, such as a silicon wafer. Microscopic transistors are printed onto the substrate using photolithography techniques to produce complex circuits of billions of transistors in a very small area, making modern electronic circuit design using ICs both low cost and high performance. ICs are produced in assembly lines of factories, termed foundries, which have commoditized the production of ICs, such as complementary metal-oxide-semiconductor (CMOS) ICs. Digital ICs contain billions of transistors, such as metal-oxide-semiconductor field-effect transistor (MOSFETs), arranged in functional and/or logical units on the wafer, with data paths interconnecting the functional units that transfer data values between the functional units. Each unit has a power source and an associated on power, off power, standby power, and the like.

It is known for a temperature sensor to be embedded in the IC. The temperature sensor may be used to protect the IC from over-heating conditions. For example, the temperature sensor may cause the IC to shut down if the temperature exceeds a threshold. It is therefore desirable that the temperature sensor be as reliable as possible. Existing temperature sensors typically require direct connection to the external power supply (VccA). Implementing supply lines to provide this connection increases the cost and complexity of the IC. As a matter of example, US2017/199089 Al and US7455450 B2 disclose semiconductor integrated circuits (IC) with embedded temperature sensors.

The foregoing examples of the related art and limitations related therewith are intended to be illustrative and not exclusive. Other limitations of the related art will become apparent to those of skill in the art upon a reading of the specification and a study of the figures.

**SUMMARY**

The following embodiments and aspects thereof are described and illustrated in conjunction with systems, tools and methods which are meant to be exemplary and illustrative, not limiting in scope.

In an aspect of the disclosure, there is provided a semiconductor integrated circuit (IC) comprising: a first ring oscillator (ROSC) circuit and a second ROSC circuit at spaced apart locations in the IC, each ROSC circuit having a respective oscillation frequency in operation that varies with temperature; a semiconductor temperature sensor, located in the IC proximate to the first ROSC circuit and providing a sensor output signal indicative of temperature; and at least one processor, configured to indicate a temperature at the second ROSC circuit based at least on the sensor output signal, the oscillation frequency of the second ROSC circuit and the oscillation frequency of the first ROSC circuit.

In embodiments, the at least one processor is configured to indicate the temperature at the second ROSC circuit at least by calibrating a relationship between temperature and the oscillation frequency of the second ROSC circuit based on a relationship between temperature and the oscillation frequency of the first ROSC circuit.

In embodiments, the at least one processor is further configured to indicate the temperature at the second ROSC circuit at least by calibrating a relationship between temperature and the oscillation frequency of the first ROSC circuit based on a relationship between temperature and the sensor output signal.

In embodiments, the at least one processor is further configured to store, in the IC: (a) results of the calibration of the relationship between temperature and the oscillation frequency of the first ROSC circuit; and (b) data which is indicative of a difference between (a) and results of the calibration of the relationship between temperature and the oscillation frequency of the second ROSC circuit.

In embodiments, the first ROSC circuit has an input coupled to receive an electrical current from an output of a first functional transistor and the second ROSC circuit has an input coupled to receive an electrical current from an output of a second functional transistor.

In embodiments, the input to the first ROSC circuit is provided by an output of a first current source and the input to the second ROSC circuit is provided by an output of a second current source.

In embodiments, the first current source comprises a first sub-threshold bias generator coupled to a control terminal of the first functional transistor and configured to bias the first functional transistor in a sub-threshold state, an output of the first functional transistor providing the output of the first current source; and wherein the second current source comprises a second sub-threshold bias generator coupled to a control terminal of the second functional transistor and configured to bias the second functional transistor in a sub-threshold state, an output of the second functional transistor providing the output of the second current source.

In embodiments, the input of first ROSC circuit is switchably coupled to receive the electrical current from the output of the first functional transistor, such that the at least one processor is configured to determine: a reference frequency based on the oscillation frequency of the first ROSC circuit when the input of the first ROSC circuit does not receive the electrical current from the output of the first functional transistor; and a sensor measurement frequency based on the oscillation frequency of the first ROSC circuit when the input of the first ROSC circuit receives the electrical current from the output of the first functional transistor.

In embodiments, the input of second ROSC circuit is switchably coupled to receive the electrical current from the output of the second functional transistor, such that the at least one processor is configured to determine: a reference frequency based on the oscillation frequency of the second ROSC circuit when the input of the second ROSC circuit does not receive the electrical current from the output of the second functional transistor; and a sensor measurement frequency based on the oscillation frequency of the second ROSC circuit when the input of the second ROSC circuit receives the electrical current from the output of the second functional transistor.

In embodiments, the semiconductor IC further comprises: power supply ports, configured to receive an external power supply. The semiconductor temperature sensor may be coupled to the power supply ports for powering the semiconductor temperature sensor.

In embodiments, the semiconductor IC further comprises: core voltage ($V_{CC}$ core) supply lines for supplying a core voltage in the IC. The first ROSC circuit and second ROSC circuit may be coupled to the core voltage supply lines.

According to the claimed invention, the at least one processor is configured to indicate the temperature at the second ROSC circuit at least by calibrating a relationship between temperature and the oscillation frequency of the second ROSC circuit based on a relationship between voltage droop and the oscillation frequency of the second ROSC circuit.

According to the claimed invention, the at least one processor is configured to indicate the temperature at the second ROSC circuit at least by calibrating a relationship between temperature and the oscillation frequency of the first ROSC circuit based on a relationship between voltage droop and the oscillation frequency of the first ROSC circuit.

In embodiments, each ROSC circuit comprises an odd number of skewed inverters.

In embodiments, an accuracy of the temperature indicated by the at least one processor is within the range of $\pm5°C$ of real temperature.

According to another aspect of the disclosure, there is provided a semiconductor integrated circuit (IC) comprising: power supply ports, configured to receive an external power supply; and a ring oscillator (ROSC) circuit in the IC, having an oscillation frequency in operation that varies with temperature, the ROSC circuit being configured to receive power from the power supply ports even when all other circuitry on the IC is powered down; at least one processor in the IC, configured to indicate a temperature state based at least on the oscillation frequency of the ROSC circuit.

In embodiments, the semiconductor IC further comprises: a semiconductor temperature sensor, located in the IC proximate to the ROSC circuit and providing a sensor output signal indicative of temperature. The at least one processor may be configured to indicate the temperature state at least by calibrating a relationship between temperature and the oscillation frequency of the ROSC circuit based on a relationship between temperature and the sensor output signal.

In embodiments, the ROSC circuit is a first ROSC circuit, and the semiconductor IC further comprises: a second ROSC circuit spaced apart from the first ROSC in the IC and having an oscillation frequency in operation that varies with temperature; and a semiconductor temperature sensor, located in the IC proximate to the second ROSC circuit and providing a sensor output signal indicative of temperature.

In embodiments, the at least one processor is configured to indicate the temperature state at least by: calibrating a relationship between temperature and the oscillation frequency of the first ROSC circuit based on a relationship between temperature and the oscillation frequency of the second ROSC circuit; and calibrating a relationship between temperature and the oscillation frequency of the second ROSC circuit based on a relationship between temperature and the sensor output signal.

In embodiments, the temperature state identifies that a temperature at the ROSC circuit is at least a threshold temperature. In embodiments, the semiconductor IC further comprises: a controller, configured to power down circuitry on the IC in response to identifying that the temperature at the ROSC circuit is at least the threshold temperature.

In embodiments, the at least one processor comprises at least one of: a controller dedicated to each ROSC circuit, and a general processor of the semiconductor IC operative under instructions of firmware in the semiconductor IC.

According to another aspect of the disclosure, there is provided a method for indicating a temperature in a semiconductor integrated circuit (IC), wherein the semiconductor IC comprises: a first ring oscillator (ROSC) circuit and a second ROSC circuit at spaced apart locations in the IC, each ROSC circuit having a respective oscillation frequency in operation that varies with temperature; and a semiconductor temperature sensor, located in the IC proximate to the first ROSC circuit and providing a sensor output signal indicative of temperature. The method comprises: indicating a temperature at the second ROSC circuit based at least on: the sensor output signal, the oscillation frequency of the second ROSC circuit, and the oscillation frequency of the first ROSC circuit.

In embodiments, indicating the temperature at the second ROSC circuit comprises: calibrating a relationship between temperature and the oscillation frequency of the second ROSC circuit based at least on a relationship between temperature and the oscillation frequency of the first ROSC circuit.

In embodiments, indicating the temperature at the second ROSC circuit further comprises: calibrating a relationship between temperature and the oscillation frequency of the first ROSC circuit based at least on a relationship between temperature and the sensor output signal.

In embodiments, indicating the temperature at the second ROSC circuit further comprises: calibrating a relationship between temperature and the oscillation frequency of the second ROSC based at least on a relationship between voltage droop and the oscillation frequency of the second ROSC.

In embodiments, the first ROSC circuit has an input coupled to receive an electrical current from an output of a first functional transistor, and the second ROSC circuit has an input coupled to receive an electrical current from an output of a second functional transistor. In embodiments, the method further comprises: switching between: a measurement mode, in which the first ROSC circuit is coupled to receive the electrical current from the output of the first functional transistor, so as to determine a sensor measurement frequency based on the oscillation frequency of the first ROSC circuit; and a reference mode, in which the input of the first ROSC circuit does not receive the electrical current from the output of the first functional transistor, so as to determine a reference frequency based on the oscillation frequency of the first ROSC circuit.

In embodiments, the method further comprises: operating in the reference mode, to determine a relationship between voltage droop and the oscillation frequency of the second ROSC circuit; storing a characteristic of the determined relationship between voltage droop and the oscillation frequency of the second ROSC circuit; and operating in the measurement mode, to determine the sensor measurement frequency of the second ROSC circuit. Indicating the temperature at the second ROSC circuit may be based at least on the sensor measurement frequency of the second ROSC circuit and the stored characteristic of the determined relationship between voltage droop and the oscillation frequency of the second ROSC circuit.

In embodiments, the method further comprises: powering the semiconductor temperature sensor by coupling the semiconductor temperature sensor to power supply ports, which receive power from an external power supply.

In embodiments, the method further comprises: powering the first ROSC circuit and second ROSC circuit by coupling the first ROSC circuit and second ROSC circuit to core voltage ($V_{CC}$ core) supply lines, which supply a core voltage in the IC.

According to another aspect of the disclosure, there is provided a method for indicating a temperature state in a semiconductor integrated circuit (IC), comprising: powering a ring oscillator (ROSC) circuit in the IC from power supply ports that receive an external power supply, such that the ROSC circuit receives power from the power supply ports even when all other circuitry on the IC is powered down, the ROSC circuit having an oscillation frequency in operation that varies with temperature; and indicating a temperature state based at least on the oscillation frequency of the ROSC circuit.

In embodiments, the semiconductor IC comprises a semiconductor temperature sensor, located in the IC proximate to the ROSC circuit and providing a sensor output signal indicative of temperature, and wherein the step of indicating the temperature state comprises calibrating a relationship between temperature and the oscillation frequency of the ROSC circuit based on a relationship between temperature and the sensor output signal.

In embodiments, the ROSC circuit is a first ROSC circuit; the semiconductor IC further comprises a second ROSC circuit spaced apart from the first ROSC in the IC and having an oscillation frequency in operation that varies with temperature; and the step of indicating the temperature state may comprise: calibrating a relationship between temperature and the oscillation frequency of second first ROSC circuit based at least on a relationship between temperature and the oscillation frequency of the first ROSC circuit.

In embodiments, the temperature state identifies that a temperature at the ROSC circuit is at least a threshold temperature. In embodiments, the method further comprises: powering down circuitry on the IC in response to identifying that the temperature at the ROSC circuit is at least the threshold temperature.

According to another aspect of the disclosure, there is provided a system that comprises: at least one hardware processor; and a non-transitory computer-readable storage device having stored thereon instruction that, when executed by said at least one hardware processor, cause the at least one hardware processor to: (a) receive measured values of a ring oscillator (ROSC) circuit in a reference mode and a leakage mode, (b) calculate a frequency to temperature-voltage response function of the ROSC circuit, and (c) transmit the response function to a device configured to program a controller associated with the ROSC circuit, such that the response function is stored at the controller and is usable by the controller to compensate a temperature readout of the ROSC circuit.

In addition to the exemplary aspects and embodiments described above, further aspects and embodiments will become apparent by reference to the figures and by study of the following detailed description.

BRIEF DESCRIPTION OF THE FIGURES

Exemplary embodiments are illustrated in referenced figures. Dimensions of components and features shown in the figures are generally chosen for convenience and clarity of presentation and are not necessarily shown to scale. The figures are listed below.

FIG. 1 shows schematically a high-level block diagram of a sensing circuit for IC power leakage detection;
FIG. 2 shows an existing arrangement for sensing temperature at a semiconductor IC, for shutting down the IC if there is overheating;
FIG. 3 shows a schematic block diagram of a temperature sensing arrangement according to a first configuration;
FIG. 4 shows a schematic block diagram of a temperature sensing arrangement according to a second configuration;
FIG. 5 shows schematically plots of voltage against temperature for a digital thermal sensor and a temperature sensor based on a ring oscillator circuit;
FIG. 6 shows exemplary plots of clock period against temperature for sample sensor ring oscillator-based sensors operating in a reference mode and in a measurement (leakage) mode;
FIG. 7 shows exemplary plots of temperature error against actual temperature for a first part of a simulation experiment;
FIG. 8 shows exemplary plots of temperature error against actual temperature for a second part of the simulation experiment;
FIG. 9 shows a flowchart of a method in accordance with the disclosure; and
FIGs. 10A and 10B show, jointly, another flowchart of a method in accordance with the disclosure.

DETAILED DESCRIPTION

Disclosed herein is a thermal sensing configuration for a semiconductor IC, and a method for operating the same. This configuration includes a network of local thermal sensors which, advantageously, leverages a VccA-powered thermal sensor to provide indirect temperature measurements at one or more locations in the IC which are distant from that VccA-powered thermal sensor. The measurement at these distant locations is facilitated by relatively simple and small ring oscillator (ROSC) circuits which may be conveniently powered by a core power ($V_{CC}$) delivery network of the IC. Various calibration, calculation and/or correlation steps may be carried out by one or more control units embedded in the IC, in order to provide those indirect temperature measurements in an accurate manner.

In semiconductor ICs, sensing of local temperature at different locations in the IC is desirable. One or more Digital Thermal Sensors (DTSs), typically based on diodes, are commonly provided in the IC. The power requirements of a DTS are high, and to provide it with electrical power, it is typically connected to the $V_{CC}$A power supply of the IC package. As a result, dedicated conduction paths are needed in the IC, from the VccA pins to the DTS. Implementing multiple DTSs in this way therefore becomes complex, expensive and power-consuming.

Present embodiments, which utilize a single DTS to measure the temperature at distant ROSC circuits, leverage the dependence of delay in a ring oscillator (ROSC) on temperature. Inverter delay normally increases with temperature, such that the ROSC frequency reduces with increasing temperature. However, an ROSC cannot be used individually as a reliable thermal sensor, because its dependence on the temperature is far from being consistent or predictable.

Therefore, present embodiments provide advantageous real-time and continuous calibration of an ROSC-based temperature sensor, which may allow such sensors to be used much more widely. According to the present disclosure, a conventional DTS (or more generally, VccA-based or $V_{BE}$-based) temperature sensor is provided in the IC, and typically powered by a relatively high voltage of approximately 1.2-1.8 Volts. This temperature sensor is characterized by its linearity - the output it produces is linear with temperature (excluding some minimal and negligible variations, of course). Proximate to it, a ROSC circuit is provided. The oscillation frequency of the ROSC circuit varies in accordance with temperature, but oftentimes not linearly, and sometimes even unpredictably. The DTS output can be used to calibrate the ROSC circuit output during IC operation. One or more additional ROSC circuits are provided in the IC at respective locations where it is desired to monitor temperature. These additional ROSC circuits are connected to the former ROSC circuit (the one proximate the DTS) via data lines. Since temperature can be accurately deduced from the oscillation frequency of the former, calibrated, ROSC circuit, propagating that calibration over the data lines to the more distant ROSC circuits allows them to also function as relatively accurate thermal sensors. These distant ROSC circuits are advantageously powered by connection to the Vcc core power delivery network of the IC. This is the power plan that runs standardly to virtually every location in the IC. It is straightforward to tap into it, and no new power plans need to be created for the ROSC circuits.

In one option, at least one of the ROSC circuits is connected to an external power supply ($V_{DD}$ ungated, for example in the range of approximately 0.5-1.0 Volts), for example from the circuit board on which the IC is mounted (via power supply pins of the IC). This ROSC circuit is constantly powered, even if the IC (which can be, for example, a CPU) is off. Many devices, especially portable devices such as smartphones, smartwatches, and laptops, have a protection mechanism that shuts them down if a temperature sensor inside their CPU detects high temperature. After the device has been shut down by the protection mechanism, every time the user will try to turn the device on, the mechanism may immediately shut it back down if temperature is still high. In this case, the user may not even be aware as to why the device is repeatedly shut down. This aspect of the disclosure may help to avoid this trial-and-error situation. The protection mechanism can rely on readings from the constantly powered ROSC circuit (and not from a temperature sensor that relies on a power state of the IC) to determine if the device should stay off or can be turned on. The protection mechanism is advantageously distinct from the CPU. This approach may also reduce cost and size of the protection mechanism on the IC and reduce worst-case margining that is based on a pre-determined timer count.

International (PCT) Patent Application no. PCT/IL2019/050039, filed January 8, 2019, entitled "Integrated Circuit Workload Temperature and/or Sub-Threshold Leakage Sensor", describes a ROSC-circuit based sensor, which may be used for temperature measurement. Such a sensor (or a variant thereof) is optionally used in the present disclosure, as will now be discussed. In this design, the ROSC circuit is provided with a leakage current from a functional transistor (referred to as a "DUT" in the '039 application, and as a "leak device" here). Digital ICs implement a large number of CMOS-based sub-circuits, each sub circuit associated with an OFF configuration. During the OFF configuration, power may still be consumed by the sub-circuit devices, such as often called static-power consumption. The static (or "leakage") power of all the sub-circuits within an IC is summed and may be called the "total IC static power".

In digital ICs, sub-threshold leakage may be considered a parasitic leakage in a state that would ideally have no current. Conversely, in micropower analog circuits, weak inversion is an efficient operating region, and sub-threshold leakage may be a useful transistor mode around which circuit functions may be designed. Leakage current can be used to measure temperature.

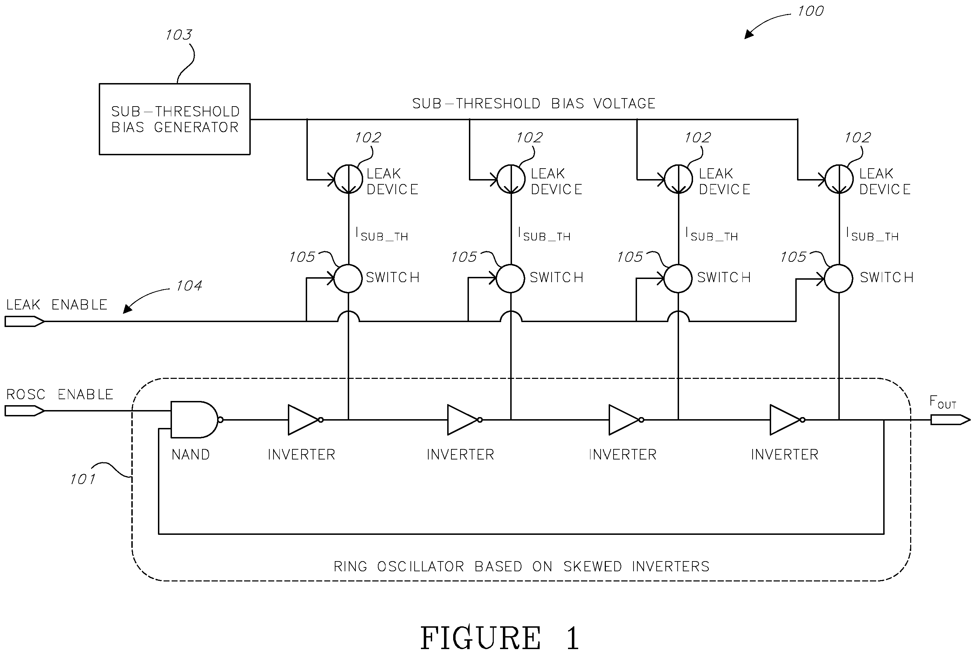

Reference is now made to FIG. 1, which shows schematically a high-level block diagram of a thermal sensing circuit 100 for IC power leakage detection and thereby, temperature measurement. Sensing circuit 100 includes a ring-oscillator (ROSC) circuit 101 that is advantageously based on a skewed inverter configuration. The sensing circuit tests one or more leak devices 102 that are each a PMOS or an NMOS transistor that have a certain leakage current. The sensing circuit includes a sub-threshold bias generation circuit 103, and leak enable switches 105 (enabled by an enable lead 104) that electrically connect the leakage current from the leak devices to the oscillator internal nodes (namely, between every two adjacent inverters). The leakage current is measured (at $F_{OUT}$) at two steps:

1. The switch is open, the oscillator frequency is measured at no leakage condition and this value is used as a reference measurement.
2. The switch is closed, and the leakage current of the leak devices becomes electrically connected to the oscillator internal nodes. The frequency of the oscillator may change in direct proportion to the leakage current amplitude.

The ratio between the two measurements may be calculated, and may be proportional to the sub-threshold leakage current amplitude of the leak devices. The reference measurement of the first step may be used to adjust the frequency measurements for other effects, such as channel-length variation, to detect the leak devices sub-threshold leakage. The reference frequency may also be adjusted for other effects, such as local voltage drops (IR droop) and/or the like, as will be discussed further below.

The ROSC enable signal, which may be generated by a controller associated with the sensing circuit 100 (discussed below), can enable and disable the ROSC circuit 101 on demand. The ROSC circuit 101 may thus be turned on when thermal measurement is required, and turned off between measurements in order to conserve power. The ROSC enable signal may directly control a NAND gate (or a similarly-operable device) forming part of the ROSC circuit 101 and functional also as an inverter which participates in the oscillation of the ROSC circuit. Power will be provided past the NAND gate only given a suitable enable signal.

In an alternative embodiment, no ROSC enable signal is used, a NAND gate does not exist in the ROSC circuit, and the ROSC circuit therefore remains constantly powered.

The sub-threshold bias generation circuit (STBGC) 103 may amplify the effect (i.e. enhance the detection) of the sub-threshold leakage current. The STBGC may generate a source-to-gate voltage within the sub-threshold voltage range, which is higher than zero and therefore may amplify the leak devices sub-threshold leakage current.

Alternatively, the skewed inverters reduce the effects on the complementary device. For example, when the leak device is a PMOS, then the number of the ring-oscillator inverter NMOS devices may be positively skewed over the size of the PMOS devices, and vice versa.

In this example, the ROSC circuit 101 can therefore be used as temperature sensor. A current is added to feed the ROSC circuit 101. The current generator increases the sensitivity of the ROSC to temperature changes, such that even a small change in temperature will result in a large (amplified) change in oscillation frequency. Moreover, the current generator changes the correlation between ring oscillator frequency and temperature, such that an increase in temperature causes an increase in ring oscillator frequency. The current generator is fed from an output current of a transistor and optionally a leakage current (particularly, current that leaks from the drain of the transistor to its source, when the gate is driven at a voltage lower that the threshold voltage of the transistor; termed sub-threshold leakage). The ROSC receives this leakage current as an input. It will be understood that other types of ROSC circuit-based temperature sensors may be considered as an alternative. Temperature sensors in an IC can be used for a variety of applications. One of these is for detecting a high temperature condition, for instance as discussed above.

Advantageously, the size of ROSC circuit 101 may be only about 200 square microns (e.g., between 100-300 square microns), compared to the size of a conventional DST which typically ranges between 10,000 and 50,000 square microns. This enables using multiple such ROSC circuits on an IC, without sacrificing much of the IC's expensive area. Those of skill in the art will recognize that these two-dimensional measurements are of the largest plane of these devices, as is customary in the semiconductor field in which ICs are fabricated in layers.

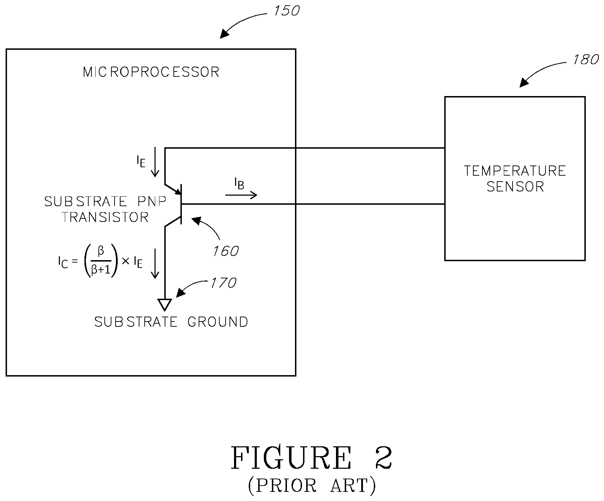

Reference is made to FIG. 2, which shows an arrangement, according to some of the prior art, for sensing temperature at a semiconductor IC and shutting down the IC if there is overheating. A microprocessor 150 comprises a substrate PNP transistor 160, with a temperature sensor 180 that is external to the microprocessor 150 and is connected between the emitter and base of the substrate PNP transistor 160.

The temperature sensor 180 senses temperature data from the PN junction of the substrate PNP transistor 160. As it is external the microprocessor 150, although located on the same circuit board, it can sense temperature at all times, for example during and after a thermal event when the microprocessor 150 is shut down. When the temperature goes below a thermal limit (threshold), the microprocessor 150 can be repowered. An example temperature sensor might include a suitably configured MAX6642 chip, sold by Maxim Integrated Products, Inc., of San Jose, California, U.S. The disadvantages of such a configuration are in terms of cost, complexity and accuracy. In cases, the user may try to repower the microprocessor 150 before the temperature has sufficiently reduced, which leads to an immediate shutdown without any indication to the user of the reason for this. A temperature sensor based on a ROSC circuit, according to present embodiments, may address this issue in some configurations, as will be discussed below.

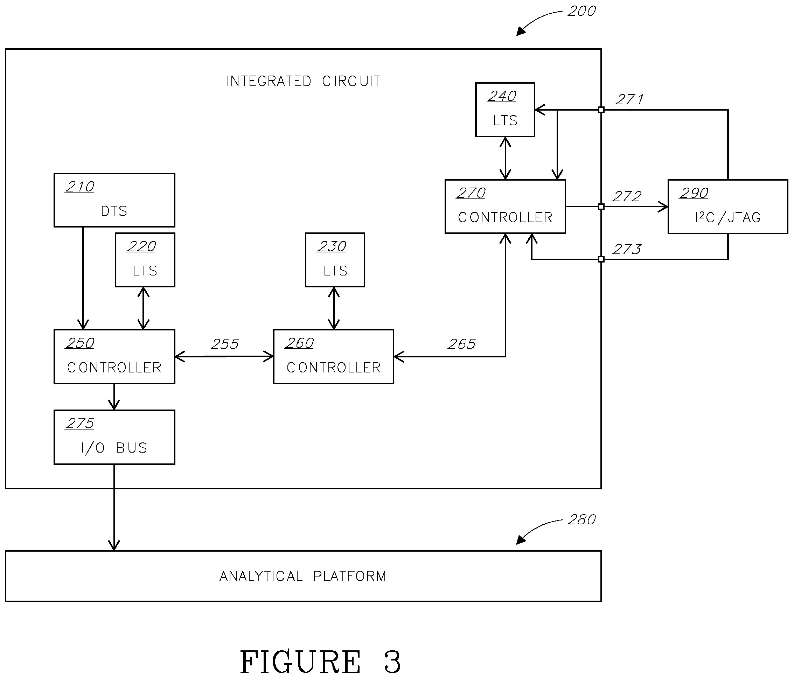

Reference is now made to FIG. 3 that shows a schematic block diagram of a temperature sensing arrangement in an IC 200, according to a first configuration. The IC may be coupled to an external analytical platform 280 through an I/O bus 275, and/or to a I$^2$C or JTAG (Joint Test Action Group) interface 290.

In the IC 200, there is provided a digital thermal sensor (DTS) 210, which is a conventional (for example, diode-based), inherently accurate temperature sensor, which is powered by $V_{CC}A$ lines. This can provide an accurate temperature measurement without the need for regular and/or repeated calibration. Proximate the DTS 210 is provided a first local temperature sensor (LTS) 220, also referred to herein as a "proximal" LTS or sensor.

The terms "proximate," "proximal," "adjacent," "near" and their synonyms are intended herein to mean a distance of up to a few hundred microns between the closest edges of the DTS 210 and the first LTS 220. For example, the distance may be up to 100, 200, or 300 microns. At a distance of 100 microns, accuracy of temperature measurement at the additional LTSs (to be discussed below) has been modeled by the inventors to be, in some cases, ±0.5 °C, which is fairly accurate. The greater the distance, the lesser the accuracy. However, in some scenarios, even an accuracy of 1-5 °C may be acceptable. It is also possible for the distance between the DTS 210 and the first LTS 220 to be more than the few hundred microns, such as between 300-1500 microns, if thermal simulation of the IC is conducted in order to compute an estimated temperature difference between where the DTS is located and where the first LTS is located, when the IC is operational. Accordingly, a method of temperature measurement according to present embodiments may also include a step of adjusting the measurement according to results of such thermal simulation performed pre-silicon.

The terms "distant," "distal," "spaced apart," and their synonyms may refer herein to a distance larger than 500 microns, 1000 microns, 2000 microns, 4000 microns, 6000 microns, 7000 microns, 8000 microns, 9000 microns, or 10000 microns between the LTS adjacent the DTS and any of the additional one or more ("distal") LTSs.

The first LTS 220 is advantageously in the form of a ROSC circuit, for example of the type discussed as the thermal sensing circuit 100 of FIG. 1. The first LTS 220 is powered by Vcc core lines. Both the DTS 210 and first LTS 220 are coupled by data lines to a first controller 250, which reads out from the DTS 210 and first LTS 220 and optionally provides the "leak enable" and/or "ROSC enable" signals discussed with reference to FIG. 1. The first controller 250 can thereby generate calibration data for the first LTS 220 based on the output of the DTS 210, in order to correlate and/or match the frequency readout of the first LTS 220 to the temperature data measured by the DTS 210. The request for calibration data may be initiated by the first LTS 220, such that if the first LTS 220 senses a change in its frequency it will request the corresponding temperature data from the DTS 210. Alternatively, temperature data for the first LTS 220 calibration may be initiated by the DTS 210 based on a pre-defined algorithm running on the first (DTS) controller 250. For example, the DTS 210 may initiate a calibration cycle of the first LTS 220 at a regular interval (such as every 1-100 ms) or, more generally, in response to any pre-defined event occurring in the IC 200.

A second LTS 230 (also referred to herein as a "distal" LTS or sensor) is provided at another location in the IC 200. The second LTS 230 is advantageously also in the form of a ROSC circuit, as discussed above. The second LTS 230 is coupled to a second controller 260, which can read out a measurement from the second LTS 230 and optionally provide the "leak enable" and/or "ROSC enable" signals to the second LTS 230. The second controller 260 is coupled to the first controller 250, from which it receives the calibration data over a first inter-controller interface 255 (realized by a suitable data line). Using this calibration data, the second controller 260 can calibrate the output of the second LTS 230 accordingly.

A third LTS 240 (another "distal" LTS or sensor) is optionally provided at a further location in the IC 200. The third LTS 240 is beneficially also in the form of a ROSC circuit, as discussed above. The third LTS 240 is coupled to a third controller 270, which can read out a measurement from the third LTS 240 and optionally provide the "leak enable" and/or "ROSC enable" signals to the third LTS 240. The third controller 270 is coupled to the second controller 260, from which it receives the calibration data over a second inter-controller interface 265. Using this calibration data, the third controller 270 can calibrate the output of the third LTS 240 accordingly. In an alternative configuration (not shown), the controllers of all distal sensors (the ones not adjacent the DTS) may be directly connected to the controller of the proximal sensor (the one adjacent the DTS), which controls them too.

Similar to the second and third LTSs, additional such distal LTSs (and associated controllers) may be spread throughout the IC, at locations where the measurement of temperature is desired. In a general sense, any number of distal LTSs (one or more) may be disposed in the IC, distant from the first LTSs which is adjacent to the DTS.

The third LTS 240 and the third controller 270, for example, may also interface with an I$^2$C or a JTAG interface 290 (or generally, with any physical interface allowing data to be read off the third controller by a device mounted externally to the IC, such as on the same circuit board). This allows the third LTS 240 and the third controller 270 to receive a supply voltage ($V_{DD}$ ungated, for example between approximately 0.5-1.0 Volts) 271 directly through the I$^2$C/JTAG interface 290. This allows the third LTS 240 and the third controller 270 to remain operational even when the remainder of the IC is switched off and/or unpowered. The third controller 270 can thereby read out from the third LTS 240 and provide a digital readout 272 to the I$^2$C/JTAG interface 290 regardless of whether Vcc power is active in the IC. In order to permit this operation, the I$^2$C/JTAG interface 290 may also provide a crystal-controlled clock signal 273 to the third controller 270. As a result, the third LTS 240 can act as a temperature sensor for control of thermal shutdown and repowering events, rather than an external sensor of the type shown in FIG. 2.

The analytical platform 280 may be a computerized system including one or more hardware processor(s) (e.g., CPUs), a random-access memory (RAM), one or more non-transitory computer-readable storage device(s), and a network interface controller. The storage device(s) may have stored thereon program instructions and/or components configured to operate the hardware processor(s). The program instructions may include one or more software modules, such as a module that calculates response functions, as is discussed further below. The software components may include an operating system having various software components and/or drivers for controlling and managing general system tasks (e.g., memory management, storage device control, power management, network communication, etc.), and facilitating communication between various hardware and software components.

The analytical platform 280 may operate by loading instructions of the response function calculation module into the RAM as they are being executed by the processor(s). The instructions of the response function calculation module may cause the analytical platform 280 to receive, such as through its network interface controller (e.g., through the Internet) data gathered from one or more ICs, process it, and output a suitable response function for each LTS of each IC.

The analytical platform 280 as described herein is only an exemplary embodiment of the present invention, and in practice may be implemented in hardware only, software only, or a combination of both hardware and software. The analytical platform 280 may have more or fewer components and modules than shown, may combine two or more of the components, or may have a different configuration or arrangement of the components. The analytical platform 280 may include any additional component enabling it to function as an operable computer system, such as a motherboard, data busses, power supply, a display, an input device (e.g., keyboard, pointing device, touch-sensitive display), etc. Moreover, components of the analytical platform 280 may be co-located or distributed, or the analytical platform could run as one or more cloud computing "instances," "containers," and/or "virtual machines," as known in the art.

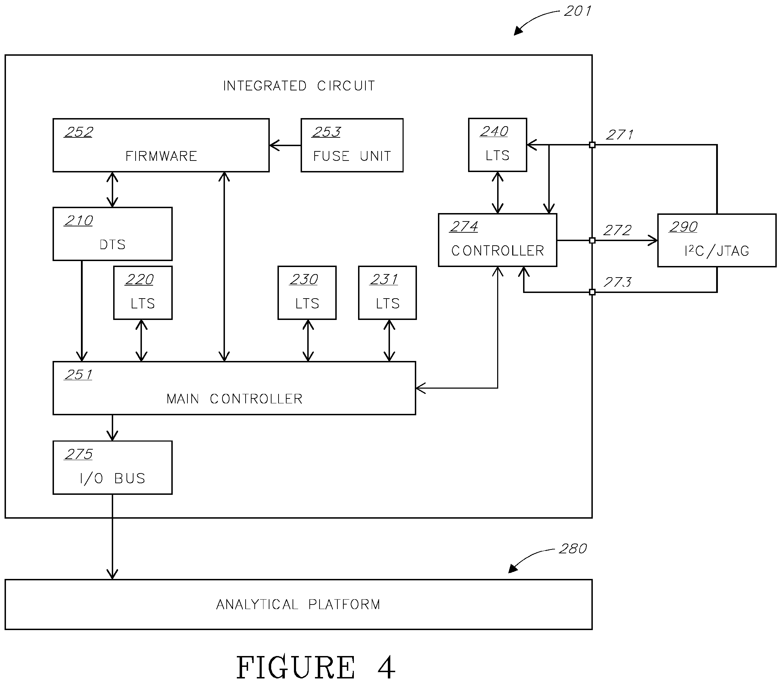

Referring now to FIG 4, there is shown a schematic block diagram of a temperature sensing arrangement in an IC 201, according to additional configurations. These configurations have many similarities with that shown in FIG. 3, and, where the same components are employed, identical reference numerals are used. The functionality of the configurations shown in FIG. 4 is similar to that of the configuration shown in FIG. 3, except in respect of the following points (and, in any certain embodiment, any one or more of these points, up to the entirety of these points, may exist). The IC 201 comprises: DTS 210; first LTS 220; a main controller 251; an IC firmware 252; a fuse unit 253; second LTS 230; a third LTS 231; a fourth LTS 240; and a controller 274. The IC firmware 252 may generate the calibration data for the first LTS 220 based on the output of the DTS 210. In this case, each time that the IC firmware 252 reads the DTS 210 it will also read the first LTS 220 readout via the main controller 251 and will correlate frequency readout of the first LTS 220 to the instantaneous temperature measured by the DTS 210.

A second LTS 230 and a third LTS 240 (each considered a "distal" LTS or sensor), for example, may be provided at other locations in the IC 201. The second LTS 230 and the third LTS 231 are advantageously also in the form of a ROSC circuit. The second LTS 230 and the third LTS 231 are each shown directly coupled to the main controller 251, which can read a measurement from the second LTS 230 and/or the third LTS 231 in response to a request from the IC firmware 252. As discussed above, the main controller 251 is coupled to the IC firmware 252. Using this calibration data, the IC firmware 252 will convert the frequency readout of the second LTS 230 and/or the third LTS 231 to an instantaneous temperature measurement.

The IC firmware 252 may utilize such temperature measurement for purposes such as shutting down the IC 201 to avoid over-heating, outputting the measurement to a system incorporating the IC 201 (e.g. a portable computing device such as a smartphone, smartwatch, laptop, etc.), and more. Furthermore, the IC firmware 252 may also control the transmission of temperature measurements to the analytical platform 280 through I/O bus 275 (in lieu of the main controller 251), and may receive occasional firmware updates that enhance the way calibration is made (e.g., if inaccuracies in the calibration algorithm are discovered by a manufacturer of the IC 201 only after many such ICs are operational in the field).

In configurations or arrangements as described with reference to FIG. 3 and/or FIG. 4, a network of Local Thermal Sensors (LTS) is essentially provided, that measures temperature at multiple die locations. Each local temperature sensor can be in accordance with the design shown in FIG. 1 or a suitable alternative. The measurement accuracy is based on calibrating the local temperature sensors, based on the chip's DTS data. This can be achieved using machine learning algorithms, for example running on the platform 280, as will be discussed below. Calibration can be performed while the IC is operating and therefore does not require tester time.

As discussed above, the use of an LTS network allows temperature data to be recorded simultaneously at multiple points on the IC. One LTS is located near the DTS, such that any thermal change at the DTS quickly propagates to and experienced by the adjacent LTS, and such that data from these two sensors can be conveniently transmitted to a nearby common controller, and/or to IC firmware. Then, a learning flow may be activated to: calibrate the LTS that is located near the DTS; and calibrate the other (distal) LTSs in the network. This will be discussed below. A special DTS is not necessarily required, and any conventional DTS provided normally within an IC design may be sufficient. The controller (for example, first controller 250 in FIG. 3) is configured to interface with ("understand") the DTS sensor output; additionally or alternatively, the output of DTS sensor 210 can be configured to interface with the IC firmware 252, which in turn also interfaces with the controller of the first (local) LTS.

In a generalized sense, there may be considered a semiconductor integrated circuit (IC) comprising: a first ROSC circuit and a second ROSC circuit at spaced apart locations in the IC, each ROSC circuit having a respective oscillation frequency in operation that varies with temperature (the first ROSC circuit typically being in a location of interest); a semiconductor temperature sensor (such as a diode-based thermal sensor and/or a digital thermal sensor), located in the IC proximate to the first ROSC circuit (such that the temperature at the second ROSC and at the semiconductor temperature sensor is very similar) and providing a sensor output signal indicative of temperature; and a processor (in the IC or external the IC), configured to indicate a temperature at the second ROSC circuit based on the sensor output signal, the oscillation frequency of the second ROSC circuit and the oscillation frequency of the first ROSC circuit. The processor may be realized as one or more of the aforementioned controllers that are each dedicated to and associated with one or more of the ROSC circuits; or, alternatively, as the IC's own processor, used mainly for other purposes, that operates under instructions of the IC's firmware. Further alternatively, the processor may be realized as a cooperation of one or more dedicated controllers and the IC's own processor (the latter acting under instructions of the firmware).

A method of manufacturing and/or operating such an IC or system based on such an IC may also be considered, in accordance with any aspect herein disclosed. For example, this may include a method for indicating a temperature in a semiconductor integrated circuit (IC), wherein the semiconductor IC comprises: a first ring oscillator (ROSC) circuit and a second ROSC circuit at spaced apart locations in the IC, each ROSC circuit having a respective oscillation frequency in operation that varies with temperature; and a semiconductor temperature sensor, located in the IC proximate to the first ROSC circuit and providing a sensor output signal indicative of temperature. The method comprises: indicating a temperature at the second ROSC circuit based on: the sensor output signal, the oscillation frequency of the second ROSC circuit, and the oscillation frequency of the first ROSC circuit. Any features discussed herein with reference to an apparatus or system may be implemented with respect to a method, process or use (and vice versa).

Optionally, each ROSC circuit comprises an odd number of skewed inverters. An accuracy of the temperature indicated by the processor may be no more than a pre-defined accuracy target, for example ±5°C, ±4°C, ±3°C, ±2°C, ±1°C, ±0.5°C, ±0.4°C, ±0.3°C, ±0.2°C, or, ±0.1°C of real temperature. In embodiments, the processor may comprise firmware in the semiconductor IC and/or fused memory. Additionally or alternatively, the processor may comprise one or more logic circuits in the IC, for example in the form a controller. Multiple controllers may be provided, for example in the form of one controller per ROSC circuit, although one controller may be used for multiple ROSC circuits in embodiments.

In embodiments, indicating the temperature at the second ROSC circuit may include calibrating a relationship (for instance, a response function) between temperature and the oscillation frequency of the second ROSC circuit based on a relationship (for instance, a response function) between temperature and the oscillation frequency of the first ROSC circuit. In other words, the relationship between temperature and the oscillation frequency of the first ROSC circuit (proximate the semiconductor temperature sensor) is known, and this relationship may be used to calibrate the relationship between temperature and the oscillation frequency of the second ROSC circuit (which is being used for temperature measurement at a remote location on the IC). It should be noted that the known relationship may be stored and used for one or multiple subsequent temperature indications using the second ROSC circuit, or the relationship may be re-determined for each indication (or each group of multiple indications, such as between 100-10000 indications per group) using the second ROSC circuit.

In embodiments, indicating the temperature at the second ROSC circuit may include calibrating a relationship (for instance, a response function) between temperature and the oscillation frequency of the first ROSC circuit based on a relationship (for instance, a response function) between temperature and the sensor output signal. In other words, the relationship between temperature and the sensor output signal (such as a DTS output) is known and this relationship may be used to calibrate the relationship between temperature and the oscillation frequency of the first ROSC circuit (proximate the semiconductor temperature sensor). As noted above, the relationship between temperature and the oscillation frequency of the first ROSC circuit may be used for calibrating the relationship between temperature and the oscillation frequency of the second ROSC circuit (which is being used for temperature measurement). The known relationship for the semiconductor temperature sensor may be stored and used for one or multiple temperature indications using the second ROSC circuit, or the relationship may be determined for each indication using the second ROSC circuit.

Beneficially, the oscillation frequency of the (first and/or second) ROSC circuit increases with increasing temperature. For example, the first ROSC circuit can have an input coupled to receive an electrical current from an output (for instance, drain) of a first functional transistor (especially one to which it is proximate). Additionally or alternatively, the second ROSC circuit can have an input coupled to receive an electrical current from an output of a second functional transistor (especially one to which it is proximate and/or which is different from the first functional transistor). Optionally, the input to the first ROSC circuit is provided by an output of a first current source and/or the input to the second ROSC circuit is provided by an output of a second current source. The first current source may comprise a first sub-threshold bias generator coupled to a control terminal of the first functional transistor and configured to bias the first functional transistor in a sub-threshold state, an output of the first functional transistor providing the output of the first current source. The second current source may comprise a second sub-threshold bias generator coupled to a control terminal of the second functional transistor and configured to bias the second functional transistor in a sub-threshold state, an output of the second functional transistor providing the output of the second current source.

In embodiments, the input of each ROSC may be switchably coupled (using a "leak enable" signal from a controller associated with that ROSC circuit) to receive the electrical current from the output of the respective functional transistor, such there may be determined: a reference frequency based on the oscillation frequency of the ROSC when the input of the ROSC does not receive the electrical current from the output of the respective functional transistor (a reference mode); and a sensor measurement frequency based on the oscillation frequency of the ROSC when the input of the ROSC receives the electrical current from the output of the respective functional transistor (a measurement mode). This may be applied to the first and/or second ROSC circuit.

In embodiments, power supply ports may be provided. These may be configured to receive an external power supply (for example $V_{CC}A$ ports). The semiconductor temperature sensor is advantageously coupled (or connected, including directly connected) to these power supply ports for powering the semiconductor temperature sensor. Typically, the first and/or second ROSC circuits are not directly connected to these ports.

In embodiments, core voltage ($V_{CC}$ core) supply lines are provided, particularly for supplying a core voltage in the IC. Advantageously, the first ROSC circuit and/or the second ROSC circuit are coupled to the core voltage supply lines.

In another generalized sense, which may be combined with any aspect or feature of other descriptions herein, there may be considered a semiconductor integrated circuit (IC) comprising: (un-gated) power supply ports, configured to receive an external power supply; a ring oscillator (ROSC) circuit in the IC, having an oscillation frequency in operation that varies with temperature, the ROSC circuit being configured to receive power from the power supply ports even when all other circuitry on the IC is powered down; and a processor in the IC, also configured to receive power from the power supply ports and further configured to indicate a temperature state based on the oscillation frequency of the ROSC circuit. Thus, continually-powered ROSC circuit and associated processor are provided in the IC, which can provide a temperature indication, even if other functional parts of the IC (such as a CPU or similar part) are unpowered or otherwise switched off. The temperature state may identify that a temperature at the ROSC circuit is at least a threshold temperature.

As previously noted, a method of manufacturing and/or operating such an IC (or a system based on such an IC) may also be considered, in accordance with any aspect herein disclosed. For example, this may include a method for indicating a temperature state in a semiconductor IC, comprising: powering a ROSC circuit in the IC from power supply ports that are configured to receive an external power supply, such that the ROSC circuit receives power from the power supply ports even when all other circuitry on the IC is powered down, the ROSC circuit having an oscillation frequency in operation that varies with temperature; and indicating a temperature state based on the oscillation frequency of the ROSC circuit. Any features discussed herein with reference to an apparatus or system may be implemented with respect to a method, process or use (or vice versa).

As noted above, this IC and/or method may be combined with other aspects discussed herein. For example, in embodiments, there may be further provided: a semiconductor temperature sensor, located in the IC proximate to the ROSC circuit and providing a sensor output signal indicative of temperature. Then, indicating the temperature state may include calibrating a relationship between temperature and the oscillation frequency of the ROSC circuit based on a (stored) relationship between temperature and the sensor output signal.

In embodiments, the ROSC circuit is termed a "first" ROSC circuit. Then, there may be further provided a second ROSC circuit spaced apart from the first ROSC in the IC and having an oscillation frequency in operation that varies with temperature. Indicating the temperature state may include indicating the temperature state at the second ROSC circuit, by: calibrating a relationship between temperature and the oscillation frequency of the second ROSC circuit based on a relationship between temperature and the oscillation frequency of the first ROSC circuit and/or calibrating a relationship between temperature and the oscillation frequency of the first ROSC circuit based on a (stored) relationship between temperature and the sensor output signal.

In embodiments, circuitry on the IC may be powered down (for example, by a controller in the IC or external the IC), for example in response to identifying that the temperature at the ROSC circuit is at least the threshold temperature.

Specific implementations will now be discussed, but further reference to the generalized sense will be made below.

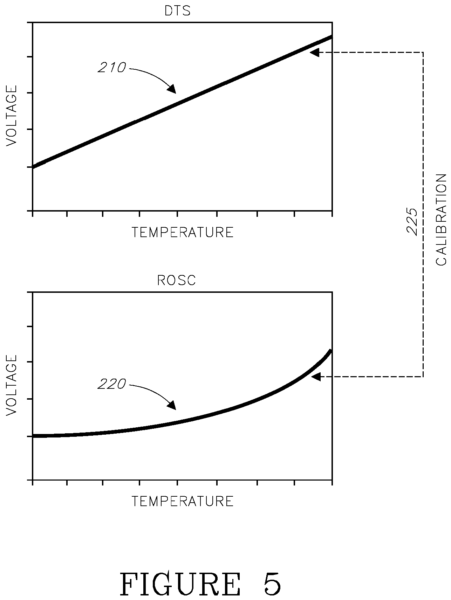

Reference is made to FIG. 5, which shows, schematically, exemplary plots of voltage against real temperature for a digital thermal sensor 210 and for a temperature sensor based on a ROSC circuit 220. As can be seen from the plot of voltage against temperature for the digital thermal sensor 210, a linear relationship is provided, making such diode-based thermal sensors relatively straightforward to provide an accurate temperature reading. However, the exemplary plot of voltage against temperature for the ROSC circuit-based temperature sensor 220 is non-linear and monotonic. However, calibration 225 between the two can be used over time to allow readout from the ROSC circuit-based temperature sensor that is sufficiently accurate for the purposes of thermal analysis, control and/or management.

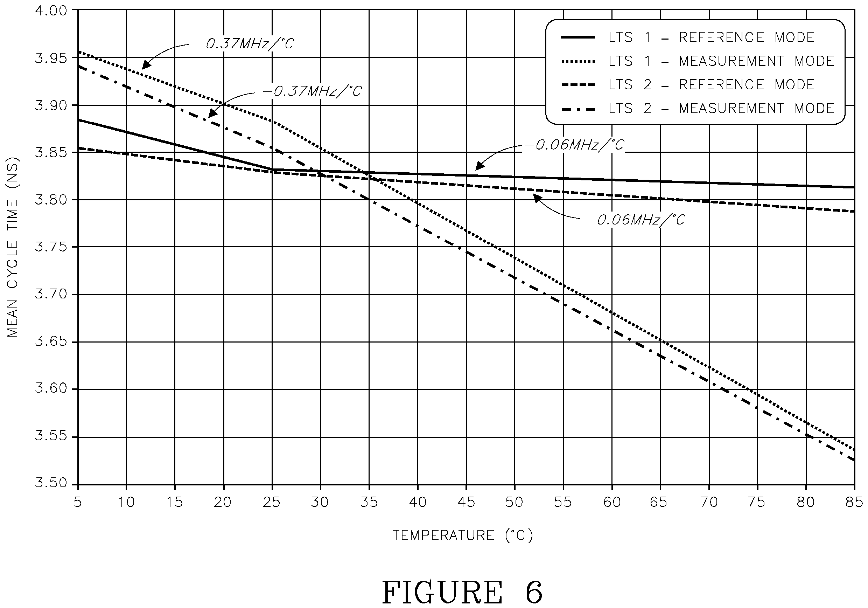

Reference is made to FIG. 6, which shows exemplary plots of silicon-measured clock period (mean cycle time in nanoseconds) against temperature for two exemplary ring oscillator-based sensors each operating in a reference mode and in a measurement mode. In the reference mode, as discussed with reference to FIG. 1 above, the ROSC circuit oscillator frequency is measured at a no leakage condition. The clock period shows no significant temperature dependence in this mode, with the gradient of clock frequency (the inverse of the clock period) to temperature being approximately - 0.06MHz/°C. However, in the measurement mode (where leakage current is provided), there is a clear temperature dependence, with the gradient of clock frequency to temperature being approximately -0.37MHz/°C.

The learning flow for calibration of the ROSC circuit-based temperature sensors will now be discussed. A first procedure may take place at the tester, to which the IC is connected following fabrication and prior to distribution to consumers. Firstly, the DTS is calibrated and at the same time, the clock frequency in the leakage (measurement) mode and the clock frequency in the reference mode are measured for all the LTSs in the network at multiple temperatures (for simplicity of discussion, two temperatures (T1, T2)) and multiple power-supply voltage values (for simplicity of discussion, two power-supply voltage values (V1, V2)). This gives a total of 8 measured values. Four measurements are taken at in the reference (REF) mode at the following conditions: {V1,T1}, {V2,T1}, {V1,T2} and {V2,T2}, and four measurements are taken in leakage-mode at the following conditions: {V1,T1}, {V2,T1}, {V1,T2} and {V2,T2}. {T1, T2} are the two temperatures that are also used to calibrate the DTS. The 8 measured values reflect the behavior of each LTS with respect to voltage and temperature at its two modes of operation (REF-mode and leakage-mode). This data may then be uploaded to the analytical platform 280 to generate a Frequency to Temperature-Voltage Response Function: $freq_{ref} = f_{ref}(V, T)$ & $freq_{lkg} = f_{leak}(V, T)$ per LTS. Each of the functions (for example, a polynomial) is represented by its self-coefficients. The coefficients of the response functions are calculated per LTS, transmitted from the analytical platform 280 back to the tester (or to any other device configured to program the controller of the LTS), and stored in the local controller on-chip. The response function is used by the local controller to compensate a temperature readout of each LTS with reference to its global manufacturing (process) point and with reference to its local voltage at the measurement time.

The second step takes place at the system in which the IC is installed, during operation. Based on data from the LTS during operation, the system learns the temperature response of the LTS that is located near the DTS (that is, the first LTS 220 in FIG. 3 and FIG. 4) in comparison with the DTS response (that is, the DTS 210 in FIG. 3 and FIG. 4). The previously-calculated response function per LTS is then adjusted if needed and all the LTS controllers are updated with the calibration data to refine the response of ROSC clock frequency against temperature. This can create a look-up table (LUT) for each LTS, mapping oscillation frequencies to temperatures.

In another embodiment, the second step described above may take place at the tester. Based on data from the LTS during operation, the system learns the temperature response of the LTS that is located near the DTS (that is, the first LTS 220 in FIG. 3 and FIG. 4) in comparison with the DTS response (that is, the DTS 210 in FIG. 3 and FIG. 4). The calibration factor per LTS is then adjusted if needed and all the LTS controllers are updated with the calibration data to refine the response of ROSC clock frequency against temperature. This can create a look-up table (LUT) for each LTS.

The learning process/flow described with reference to the above paragraphs may be performed on a large sample of ICs.

In practice, for the configuration of FIG. 3, when the frequency of the first LTS 220 changes, the first controller 250 reads temperature data from the DTS 210 and assigns the read-out temperature to the frequency readout of the first LTS 220. The data pair of clock frequency and temperature for the first LTS 220 is stored in a local register at the first controller 250. The compensation factor is then adjusted (as will be discussed below) and each other LTS is updated in line with the data from DTS 210 and the determined compensation factor. As an alternative to this practice, when the first controller 250 detects a disparity between a temperature reading from the DTS 210 and a temperature reading (based on the previously-calculated response function) of the first LTS 220, it can simply set the compensation factor as a numerical temperature offset that is then communicated to all other LTSs. For example, if the DTS 210 indicates a temperature of 70°C and the first LTS 220 indicates 69.7°C, an offset of +0.3°C may be communicated to the other LTSs.

Referring to FIG. 4, the coefficients of the response function are calculated for each LTS and stored or fused (e.g., during testing) in the fuse unit 253 on-chip. The response function is used by the firmware 252 (which has access to the fused data in the fuse unit 253) to compensate a temperature readout of each LTS with reference to its global manufacturing (process) point and with reference to its local voltage at the measurement time.

The second step takes place at the system during operation. Based on data from the LTS during operation, the system learns the temperature response of the LTS that is located near the DTS (that is, the first LTS 220 in FIG. 4) in comparison with the DTS response (that is, the DTS 210 in FIG. 4). The response function per LTS is then adjusted if needed and all the LTS response functions are updated with the calibration data to refine the response of ROSC clock frequency against temperature.

The response function can be updated by programming the firmware 252 during the chip operational lifetime, such as in a firmware upgrade process.

In practice, when the firmware 252 performs a reading of the DTS 210, it will read the DTS temperature data and also the LTS readouts (in both reference mode and leakage mode). The data pair of clock frequency and temperature for the LTS is stored in a local register of the firmware 252. The compensation factor is then adjusted (as will be discussed below), or simply set as a numerical offset value, and all the LTSs are updated in line with the data from DTS 210 and the determined compensation factor.

The response function may be generated at the analytical platform 280, which is a computerized device configured to receive data from many ICs, either through testers or systems incorporating these ICs, and run mathematical, statistical, and/or machine learning operations on the data. The response function compensates: the manufacturing process-point per LTS 230 (a first compensation factor); and for local voltage (IR) droop (a second compensation factor). The second compensation factor will be discussed in more detail below. By suitable configuration and compensation, an accuracy target of no greater than 5°C can be achieved, as mentioned above.

Although the learning flow has been discussed above with reference to two temperatures and two voltages, it can certainly be conducted on the basis of a larger number of temperatures and/or voltages. In addition, the discrete temperature and voltage values may be selected to be sufficiently different from one another, in order for the calibration to be effective. For example, if two discrete temperature values are used, they may be selected to be at or near the edges of a typical temperature range of the IC (which is commonly in the realm of tens of degrees Centigrade), and if three or more discrete temperature values used, they may be evenly distributed across that range. The same rationale applies to voltages selection.

Since the local voltage may be different between the tester and the system, a second compensation factor may be used for mitigating the effect of voltage (IR) droop during operation of the IC. The following procedure allows the second compensation factor to be determined. The first part of the procedure is performed with the IC at the tester. The IC is operated in a "quiet" mode, in which the functional circuitry on the IC is not drawing significant power. The response function and the response coefficients for each LTS are calculated as described above. During the operation of the IC, the LTS frequency is measured when operating in each of its two modes (reference and leakage). The temperature data is generated from the LTS readout when operating in leakage mode and then compensated based on the measured frequency in reference mode and the response function/coefficients:

$$T = g\left(f_{lkg}\left(a_1, a_2, a_3,,, a_n, readout_{L_{mode}}\right), f_{ref}\left(b_1, b_2, b_3,,, b_m, readout_{R_{mode}}\right)\right),$$

or

$$T = \left(f_{lkg}\left(a_1, a_2, a_3,,, a_n, readout_{L_{mode}}\right), V\left(readout_{R_{mode}}\right)\right),$$

where $V = f_{ref}(b_1, b_2, b_3,,, b_m, readout_{R_{mode}})$. These are examples of a temperature calculation function based on the two readouts, but other functions or polynomials can be implemented as well.

In a different embodiment, voltage differences between the tester and the system are compensated as follows: At the tester, all of the LTSs on the IC are placed in reference mode and the clock frequency for each LTS is measured, assuming no local IR droop. The response function and the response coefficients for each LTS is calculated as described above. As noted above, each LTS is relatively insensitive to temperature when operating in the reference mode. Then, with the IC still at the tester, the IC is operated in a "maximum power" mode, in which the functional circuitry on the IC is drawing significant power. Again, all of the LTSs on the IC are placed in reference mode and the clock frequency for each LTS is measured. Now, local IR droop is assumed. Then, at the analytical platform 280, the data determined from the tester and system is used to calculate the second calibration factor for the response function of each LTS. The calibrated response function coefficients for each LTS are provided to and stored at the controller associated with the respective LTS on the IC. In the case of FIG. 4, the calibrated response function coefficients for each LTS are provided to and fused in the chip fuse unit 253, or, if no such fuse unit is included in the IC, to a suitable register at the firmware 252.

In a different embodiment, the voltage differences between the tester and system may be compensated as follows: An estimator function is built at the pre-silicon stage, based on leakage mode and reference mode simulated data against temperature, voltage and global-process corner. At the post-silicon stage, the parameters are measured as describe above for each LTS and loaded to the analytic platform 280. These parameters are used to calibrate the estimator function. The corrected response function is loaded into the controller (for example, first controller 250 of FIG. 3) or into the IC firmware 252 (as in FIG. 4) and used to generate accurate temperature data based on the measured leakage mode and reference mode readouts. The learning process/flow described with reference to the above paragraphs may be performed on a large sample of ICs.

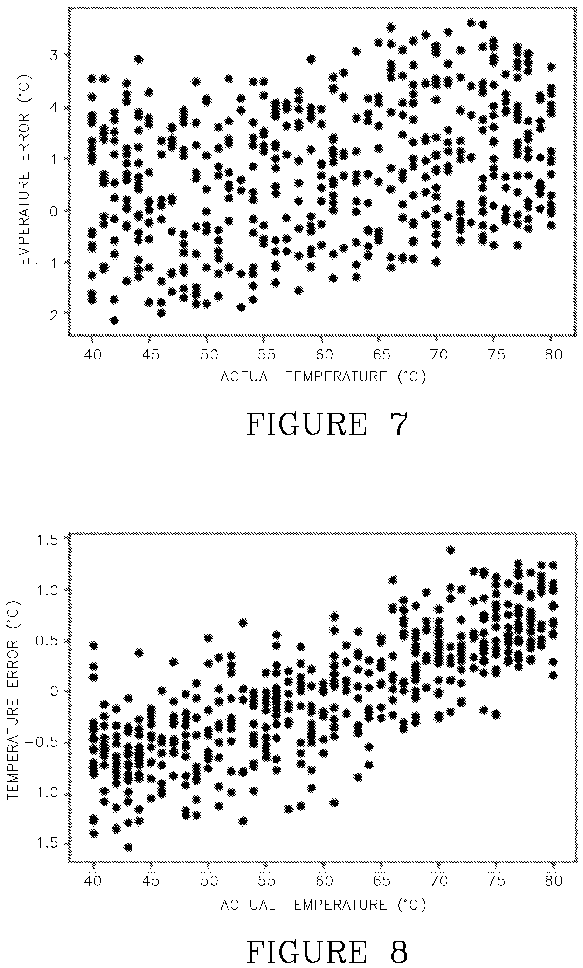

Reference is made to FIG. 7, which shows an exemplary plot of temperature error against actual temperature for a first part of a simulation experiment, and to FIG. 8, which shows an exemplary plot of temperature error against actual temperature for a second part of the simulation experiment. The simulation experiment was conducted based on the technique described above in respect of the learning flow for calibration of the ROSC circuit-based temperature sensors. In the experiment, 500 LTSs from 500 different local process points around a typical process corner were simulated at two temperatures (T1 = 5°C, T2 = 105°C) and at two power-supply voltage values (V1 = 825mV, V2 = 850mV). This gives a total of 8 simulation points. Four simulation points correspond to the reference (REF) mode at the following conditions: {V1,T1}, {V2,T1}, {V1,T2} and {V2,T2}, and four simulation points correspond to the leakage mode at the following conditions: {V1,T1}, {V2,T1}, {V1,T2} and {V2,T2}.

For each LTS, a response function was calculated in the following form:

$$H = \left( f_{lkg}\left( a_1, a_2, a_3, , a_n, readout_{L_{mode}} \right), V\left( readout_{R_{mode}} \right) \right),$$

where $V = f_{ref}(b_1, b_2, b_3, , b_m, readout_{R_{mode}})$.

At the second stage of the experiment, each of the 500 LTSs was simulated in its two modes at random temperatures and random voltages. The voltages and temperatures were uniformly distributed in the range: $V \sim U\{0.825V, 0.85V\}, T \sim U\{40C, 80C\}$, where $U\{.\}$ indicates a uniform distribution. Then, the temperature of each of the LTSs was calculated, based on its simulated readouts and the response function, as discussed above. The results in FIG. 7 show the temperature error (in the Y-axis) against the actual (real) temperature of the simulation (in the X-axis) for each of the 500 LTSs. At the third stage of the experiment, the temperature data of each of the 500 LTSs were further compensated based on the data of a reference DTS 220. The results in FIG. 8 show the temperature error (in the Y-axis) against the actual temperature (in the X-axis) for each of the 500 LTSs. A reduced range of error can be seen in FIG. 8 in comparison with FIG. 7.

Reference is again made to the generalized sense of the disclosure, discussed above. In embodiments, calibrating the relationship between temperature and the oscillation frequency of the second ROSC circuit based on a relationship between temperature and the oscillation frequency of the first ROSC circuit may comprise adjusting a lookup table associated with the second ROSC circuit and/or applying a compensation factor to a value derived from a measurement of the oscillation frequency of the second ROSC circuit. In embodiments, calibrating a relationship between temperature and the oscillation frequency of the first ROSC circuit based on a relationship between temperature and the sensor output signal may comprise adjusting a lookup table associated with the first ROSC circuit and/or applying a compensation factor to a value derived from a measurement of the oscillation frequency of the first ROSC circuit.

In embodiments, indicating the temperature at the second ROSC circuit may include calibrating a relationship between temperature and the oscillation frequency of the second ROSC circuit based on a (stored) relationship (for instance, a response function) between voltage droop and the oscillation frequency of the second ROSC circuit. For example (at a tester), the second ROSC circuit may be operated in the reference mode to determine a relationship (for instance, a response function) between voltage droop and the oscillation frequency of the second ROSC circuit. A characteristic of the determined relationship (for instance, a response function) between voltage droop and the oscillation frequency of the second ROSC circuit may be stored. The second ROSC circuit may then be operated in the measurement mode, to determine the sensor measurement frequency of the first ROSC circuit. Indicating the temperature at the second ROSC circuit may be based on the sensor measurement frequency of the second ROSC circuit and the stored characteristic of the determined relationship between voltage droop and the oscillation frequency of the second ROSC circuit.

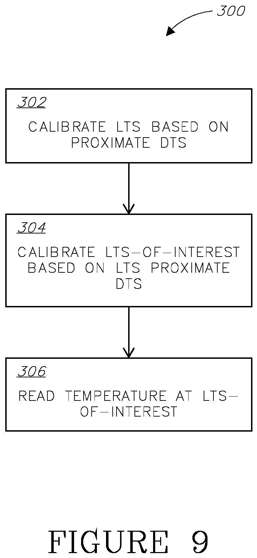

Reference is made to FIG. 9, which shows a flowchart of a method 300 for operating a local thermal sensor network in an IC, in accordance with the disclosure. In a first calibration step 302, a relationship between temperature and the oscillation frequency of a ROSC circuit-based LTS that is located in the IC proximate to a DTS (such that it has effectively the same temperature as the DTS, for example no more than 0.05, 0.1, 0.2, 0.3, 0.4, or 0.5 °C different from the DTS) is calibrated based on a relationship between temperature and the DTS output signal.

In a second calibration step 304, a relationship between temperature and the oscillation frequency of an LTS-of-interest (distal, ROSC circuit-based) is calibrated based on a relationship between temperature and the oscillation frequency of the LTS located proximate to the DTS. Optionally, the second calibration step 302 includes calibrating a relationship between temperature and the oscillation frequency of the LTS-of-interest based on a relationship between voltage droop and the oscillation frequency of the LTS-of-interest. The second calibration step 304 may be performed for each of multiple LTSs-of-interest in the IC.

In a final step 304, a temperature at the LTS-of-interest is read and indicated based on: the oscillation frequency of the LTS-of-interest, the DTS output signal, and the oscillation frequency of the LTS proximate to the DTS, due to the calibrations steps 302 and 304. It should be noted that the first calibration step 302 and/or the second calibration step 304 need not take place before each final step 306, but rather the final step 306 may be repeated without the need to repeat the first calibration step 302 and/or the second calibration step 304.

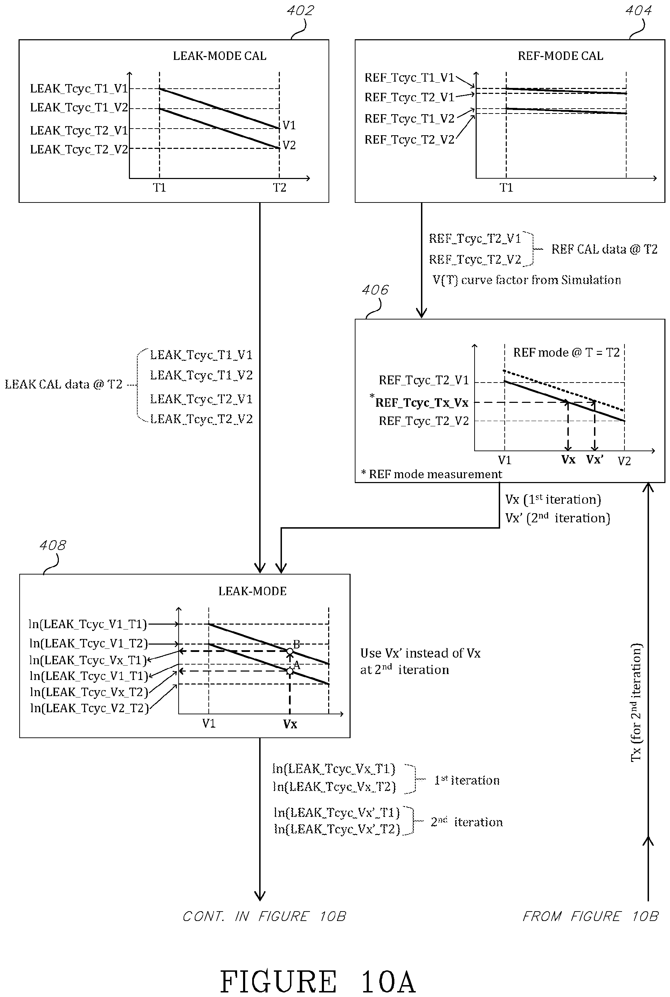

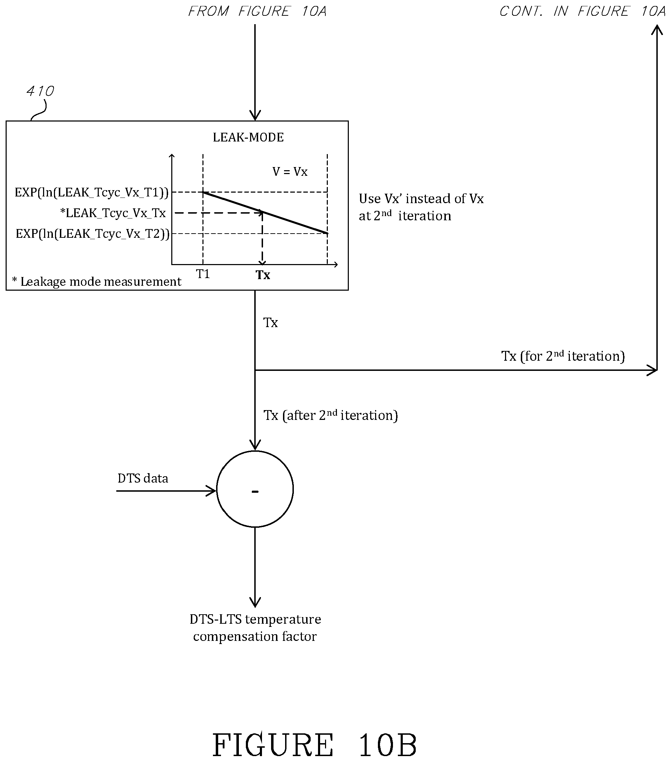

Reference is made to FIGs. 10A and 10B, which show a flowchart (extending over both figures) for operating a local thermal sensor network in an IC, in accordance with an exemplary implementation of the invention. The input to the flowchart is based on calibration data. In the example, the calibration is done at two temperatures (T1, T2) and two voltages (V1, V2), but in order to preserve fuse unit (e.g., eFuse) resources, the following optional steps are taken in order to minimize the stored data:

1. The calibration is not done symmetrically for all the LTSs in the IC. Namely, for the first (proximal) LTS (220 in FIGs. 3 and 4), the calibration is performed at all 8 {V,T} points. For the other (distal) LTSs (230 and 231 in FIGs. 3 and 4), the calibration is performed at a smaller {V,T} set, for example {V1,T2} and {V2,T2}.

2. The calibration data of the first (proximal) LTS and of each of the distal LTSs is represented in two different ways: for the first LTS, the stored calibration data is stored in full, as binary data (multiple bits); for each of the other LTSs, the stored data indicates only the delta (difference) between the calibration data of that LTS and the calibration data of the first LTS at the same {V,T} points. This delta is then translated into binary and stored in the eFuse(s) for each of the other LTSs. Optionally, the delta is averaged across different voltages at the same temperature, and only the average is stored - so as to conserve further storage space.

The process above defines two types of flow input data:

1. The calibration data of the first (proximal) LTS.
2. For each of the other LTSs, the delta (or average delta, as discussed above) between its calibration data and the calibration data of the first (proximal) LTS.

Table 1, associated with FIG. 10, lists 6 data items for each type of LTS (proximal or distal), that are based on the calibration data; for extracting the temperature of the first LTS, the 6 data items in the second column will be used, and for extracting the temperature of each of the other LTSs, the 6 data items in the third column will be used. In the table, text in bold letters denotes eFuse data, and "AVG" denotes "average" (referring to the averaged delta).

Table 1

| | First (proximal) LTS | Other (distal) LTSs |
|---|---|---|
| Ref. mode calibration data @ T2 | REF_Tcyc_T2_V1 | REF_Tcyc_T2_V1 + Δ**REF_AVG_Tcyc_T2_V1_V2** |
| | REF_Tcyc_T2_V2 | REF_Tcyc_T2_V2 + Δ**REF_AVG_Tcyc_T2_V1_V2** |

(continued)

| | First (proximal) LTS | Other (distal) LTSs |
|---|---|---|
| Leakage mode calibration data @ T2 | LEAK_Tcyc_T1_V1 | **LEAK_Tcyc_T1_V1 + (ΔREF_AVG_Tcyc_T2_V1_V2 +ΔLEAK_AVG_Tcyc_T2_V1_V2)/2** |
| | LEAK_Tcyc_T1_V2 | **LEAK_Tcyc_T1_V2 + (ΔREF_AVG_Tcyc_T2_V1_V2 +ΔLEAK_AVG_Tcyc_T2_V1_V2)/2** |
| | LEAK_Tcyc_T2_V1 | **LEAK_Tcyc_T2_V1 + (ΔREF_AVG_Tcyc_T2_V1_V2 +ΔLEAK_AVG_Tcyc_T2_V1_V2)/2** |
| | LEAK_Tcyc_T2_V2 | **LEAK_Tcyc_T2_V2 + (ΔREF_AVG_Tcyc_T2_V1_V2 +ΔLEAK_AVG_Tcyc_T2_V1_V2)/2** |

Blocks 402 and 404 each illustrate the calibration data on a cycle time vs. temperature graph. Block 402 shows a response function (Tcyc vs. Temp) at leakage ("leak") mode and at two voltages (V1 and V2). Block 404 shows a response function (Tcyc vs. Temp) at reference ("ref") mode and at two voltages (V1 and V2).

Note that, in block 404, data at T1 is optional and may require 10 additional eFuses: 5 bits per each {T,V} point to store the delta between (T1,V1) and (T2,V1), and between (T1,V2) and (T2,V2).

The flow continues, at block 406, by extracting the local voltage of each LTS. This is performed by generation of a response function between the reference mode cycle time and the voltage; the input to this stage is the calibration data and a curve factor that is extracted by pre-silicon simulation to increase the response function accuracy. The value of measured reference mode cycle time is then used as an input to the response function, to extract the local $V_{DD}$ of the LTS, represented as $V_x$.

A second response function that is generated, shown at block 408, is the response function of the leakage mode cycle time vs. $V_{DD}$. The second response function is generated based on the calibration data. For better linearization, the Y axis of the response function may be generated by taking the natural logarithm (Ln) of the calibration data. The value of the extracted local $V_{DD}$ ($V_x$ from block 406) is then used as an input to generate a third response function shown in block 408. The third response function represents the behavior of the leakage mode cycle time at $V_{DD} = V_x$. The value of measured leakage mode cycle time is then used as an input to the response function, to extract the local temperature ($T_x$) of the LTS.

The flow may continue by performing a second iteration to improve the accuracy of the measured temperature. The extracted local temperature ($T_x$) is used to recalculate the first response function of block 406. Using the pre-silicon compensation factor, the behavior of reference cycle time vs. voltage is compensated based on $T_x$. Together with the measured reference cycle time, the response function will generate an accurate local $V_{DD}$ represented by $V_{x'}$. $V_{x'}$ will be used to recalculate the temperature $T_x$.

After the second iteration, the DTS temperature may be compared to $T_x$, to generate a compensation factor for all the LTSs.

Throughout this application, various embodiments of this invention may be presented in a range format. It should be understood that the description in range format is merely for convenience and brevity. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range. Similarly, a description of a range with fractional values such as from 0.1 to 0.5 should be considered to have specifically disclosed individual fractional values such as 0.2, 0.3, and 0.4.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

In the description and claims of the application, each of the words "comprise" "include" and "have", and forms thereof, are not necessarily limited to members in a list with which the words may be associated.

In the description and claims of the application, each of the terms "approximately," "about," and forms thereof, which are used in conjunction with a numerical value, are intended to denote a range of ±20% beyond that numerical value.

To clarify the references in this disclosure, it is noted that the use of nouns as common nouns, proper nouns, named nouns, and the/or like is not intended to imply that embodiments of the invention are limited to a single embodiment, and many configurations of the disclosed components can be used to describe some embodiments of the invention, while other configurations may be derived from these embodiments in different configurations.

In the interest of clarity, not all of the routine features of the implementations described herein are shown and described. It should, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another. Moreover, it will be appreciated that such a development effort might be complex and time-consuming but would nevertheless be a routine undertaking of engineering for those of ordinary skill in the art having the benefit of this disclosure.

Based upon the teachings of this disclosure, it is expected that one of ordinary skill in the art will be readily able to practice the present invention. The descriptions of the various embodiments provided herein are believed to provide ample insight and details of the present invention to enable one of ordinary skill to practice the invention. Moreover, the various features and embodiments of the invention described above are specifically contemplated to be used alone as well as in various combinations.

Conventional and/or contemporary circuit design and layout tools may be used to implement the invention. The specific embodiments described herein and, in particular the various thicknesses and compositions of various layers, are illustrative of exemplary embodiments, and should not be viewed as limiting the invention to such specific implementation choices. Accordingly, plural instances may be provided for components described herein as a single instance.

While circuits and physical structures are generally presumed, it is well recognized that in modern semiconductor design and fabrication, physical structures and circuits may be embodied in computer readable descriptive form suitable for use in subsequent design, test or fabrication stages as well as in resultant fabricated semiconductor integrated circuits. Accordingly, claims directed to traditional circuits or structures may, consistent with particular language thereof, read upon computer readable encodings and representations of same, whether embodied in media or combined with suitable reader facilities to allow fabrication, test, or design refinement of the corresponding circuits and/or structures. Structures and functionality presented as discrete components in the exemplary configurations may be implemented as a combined structure or component. The invention is contemplated to include circuits, systems of circuits, related methods, and computer-readable medium encodings of such circuits, systems, and methods, all as described herein, and as defined in the appended claims. As used herein, a computer readable medium includes at least disk, tape, or other magnetic, optical, semiconductor (e.g., flash memory cards, ROM), or electronic medium and a network, wireline, wireless or other communications medium.

Even though the preferred embodiments are described in the context of a PLL operating at exemplary frequencies, the teachings of the present invention are believed advantageous for use with other types of circuitry in which a circuit element, such as an inductor, may benefit from electromagnetic shielding. Moreover, the techniques described herein may also be applied to other types of circuit applications.

Embodiments of the present invention may be used to fabricate, produce, and/or assemble integrated circuits and/or products based on integrated circuits.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire. Rather, the computer readable storage medium is a non-transient (i.e., not-volatile) medium.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Java, Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in 14the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

**Claims**

1. A semiconductor integrated circuit, IC, (200, 201) comprising:

   a first ring oscillator, ROSC, circuit (220) and a second ROSC circuit (230, 231, 240) at spaced apart locations in the IC (200, 201), each ROSC circuit (220, 230, 231, 240) having a respective oscillation frequency in operation that varies with temperature;
   a semiconductor temperature sensor (210), located in the IC (200, 201) proximate to the first ROSC circuit (220) and providing a sensor output signal indicative of temperature; and
   at least one processor (250, 251, 260, 270, 274), configured to indicate a temperature at the second ROSC circuit (230, 231, 240) based at least on: the sensor output signal, the oscillation frequency of the second ROSC circuit (230, 231, 240), and the oscillation frequency of the first ROSC circuit (220);
   wherein the at least one processor (250, 251, 260, 270, 274) is configured to indicate the temperature at the second ROSC circuit (230, 231, 240) at least by: calibrating a relationship between temperature and the oscillation frequency of the second ROSC circuit (230, 231, 240) based on a relationship between a local voltage (IR) droop and the oscillation frequency of the second ROSC circuit (230, 231, 240); and calibrating a relationship between temperature and the oscillation frequency of the first ROSC circuit (220), based on a relationship between a local voltage (IR) droop and the oscillation frequency of the first ROSC circuit (220).

2. The semiconductor IC (200, 201) of claim 1, wherein the at least one processor (250, 251, 260, 270, 274) is configured to indicate the temperature at the second ROSC circuit (230, 231, 240) at least by calibrating a relationship between temperature and the oscillation frequency of the second ROSC circuit (230, 231, 240) based on a relationship between temperature and the oscillation frequency of the first ROSC circuit (220).

3. The semiconductor IC (200, 201) of claim 2, wherein the at least one processor (250, 251, 260, 270, 274) is further configured to indicate the temperature at the first ROSC circuit (220) at least by calibrating a relationship between temperature and the oscillation frequency of the first ROSC circuit (220) based on a relationship between temperature and the sensor output signal.

4. The semiconductor IC (200, 201) of claim 3, wherein the at least one processor (250, 251, 260, 270, 274) is further configured to store, in the IC (200, 201):

   (a) results of the calibration of the relationship between temperature and the oscillation frequency of the first ROSC circuit (220); and
   (b) data which is indicative of a difference between (a) and results of the calibration of the relationship between temperature and the oscillation frequency of the second ROSC circuit (230, 231, 240).

5. The semiconductor IC (200, 201) of any one of claims 1-4, wherein the first ROSC circuit (220) has an input coupled to receive an electrical current from an output of a first functional transistor and the second ROSC circuit (230, 231, 240) has an input coupled to receive an electrical current from an output of a second functional transistor.

6. The semiconductor IC (200, 201) of claim 5, wherein the input to the first ROSC circuit (220) is provided by an output of a first current source and, the input to the second ROSC circuit (230, 231, 240) is provided by an output of a second current source.

7. The semiconductor IC (200, 201) of claim 6, wherein:

   the first current source comprises a first sub-threshold bias generator (103) coupled to a control terminal of the first functional transistor and configured to bias the first functional transistor in a sub-threshold state, an output of the first functional transistor providing the output of the first current source; and
   the second current source comprises a second sub-threshold bias generator (103) coupled to a control terminal of the second functional transistor and configured to bias the second functional transistor in a sub-threshold state, an output of the second functional transistor providing the output of the second current source.

8. The semiconductor IC (200, 201) of any one of claims 5-7, wherein the input of first ROSC circuit (220) is switchably coupled to receive the electrical current from the output of the first functional transistor, such that the at least one processor (250, 251, 260, 270, 274) is configured to determine:

a reference frequency based on the oscillation frequency of the first ROSC circuit (220) when the input of the first ROSC circuit (220) does not receive the electrical current from the output of the first functional transistor, and a sensor measurement frequency based on the oscillation frequency of the first ROSC circuit (220) when the input of the first ROSC circuit (220) receives the electrical current from the output of the first functional transistor.

9. The semiconductor IC (200, 201) of any one of claims 5-7, wherein the input of second ROSC circuit (230, 231, 240) is switchably coupled to receive the electrical current from the output of the second functional transistor, such that the at least one processor (250, 251, 260, 270, 274) is configured to determine:

a reference frequency based on the oscillation frequency of the second ROSC circuit (230, 231, 240) when the input of the second ROSC circuit (230, 231, 240) does not receive the electrical current from the output of the second functional transistor, and a sensor measurement frequency based on the oscillation frequency of the second ROSC circuit (230, 231, 240) when the input of the second ROSC circuit (230, 231, 240) receives the electrical current from the output of the second functional transistor.

10. The semiconductor IC (200, 201) of any one of claims 1-9, further comprising:

power supply ports, configured to receive an external power supply; and wherein the semiconductor temperature sensor (210) is coupled to the power supply ports for powering the semiconductor temperature sensor (210).

11. The semiconductor IC (200, 201) of any one of claims 1-10, further comprising:

core voltage ($V_{CC}$ core) supply lines for supplying a core voltage in the IC (200, 201); and wherein the first ROSC circuit (220) and second ROSC circuit (230, 231, 240) are coupled to the core voltage supply lines.

12. The semiconductor IC (200, 201) of any one of claims 1-11, wherein each ROSC circuit (220, 230, 231, 240) comprises an odd number of skewed inverters.


**Patentansprüche**

1. Integrierte Halbleiterschaltung, IC, (200, 201), umfassend:

eine erste Ringoszillator-, ROSC,-Schaltung (220) und eine zweite ROSC-Schaltung (230, 231, 240) an beabstandeten Orten in der IC (200, 201), wobei jede ROSC-Schaltung (220, 230, 231, 240) während eines Betriebs eine jeweilige Oszillationsfrequenz aufweist, welche je nach Temperatur variiert; einen Halbleiter-Temperatursensor (210), welcher in der IC (200, 201) in der Nähe der ersten ROSC-Schaltung (220) angeordnet ist und welcher ein Sensor-Ausgabesignal bereitstellt, welches für eine Temperatur indikativ ist; und wenigstens einen Prozessor (250, 251, 260, 270, 274), welcher dazu eingerichtet ist, eine Temperatur an der zweiten ROSC-Schaltung (230, 231, 240) zu indizieren, wenigstens auf Grundlage von: dem Sensor-Ausgabesignal, der Oszillationsfrequenz der zweiten ROSC-Schaltung (230, 231, 240) und der Oszillationsfrequenz der ersten ROSC-Schaltung (220); wobei der wenigstens eine Prozessor (250, 251, 260, 270, 274) dazu eingerichtet ist, die Temperatur an der zweiten ROSC-Schaltung (230, 231, 240) zu indizieren, wenigstens durch: ein Kalibrieren eines Verhältnisses zwischen Temperatur und der Oszillationsfrequenz der zweiten ROSC-Schaltung (230, 231, 240), auf Grundlage eines Verhältnisses zwischen einem lokalen Spannungs-(IR)-abfall und der Oszillationsfrequenz der zweiten ROSC-Schaltung (230, 231, 240); und ein Kalibrieren eines Verhältnisses zwischen Temperatur und der Oszillationsfrequenz der ersten ROSC-Schaltung (220), auf Grundlage eines Verhältnisses zwischen einem lokalen Spannungs-(IR)-abfall und der Oszillationsfrequenz der ersten ROSC-Schaltung (220).

2. Halbleiter-IC (200, 201) nach Anspruch 1, wobei der wenigstens eine Prozessor (250, 251, 260, 270, 274) dazu eingerichtet ist, auf Grundlage eines Verhältnisses zwischen Temperatur und der Oszillationsfrequenz der ersten ROSC-Schaltung (220) die Temperatur an der zweiten ROSC-Schaltung (230, 231, 240) wenigstens durch ein Kalibrieren eines Verhältnisses zwischen Temperatur und der Oszillationsfrequenz der zweiten ROSC-Schaltung (230, 231, 240) zu indizieren.

3. Halbleiter-IC (200, 201) nach Anspruch 2, wobei der wenigstens eine Prozessor (250, 251, 260, 270, 274) ferner dazu eingerichtet ist, auf Grundlage eines Verhältnisses zwischen Temperatur und dem Sensor-Ausgabesignal die Temperatur an der ersten ROSC-Schaltung (220) wenigstens durch Kalibrieren eines Verhältnisses zwischen Temperatur und der Oszillationsfrequenz der ersten ROSC-Schaltung (220) zu indizieren.

4. Halbleiter-IC (200, 201) nach Anspruch 3, wobei der wenigstens eine Prozessor (250, 251, 260, 270, 274) ferner dazu eingerichtet ist, in der IC (200, 201) zu speichern:

(a) Ergebnisse der Kalibrierung des Verhältnisses zwischen Temperatur und der Oszillationsfrequenz der ersten ROSC-Schaltung (220); und
(b) Daten, welche für eine Differenz zwischen (a) und Ergebnissen der Kalibrierung des Verhältnisses zwischen Temperatur und der Oszillationsfrequenz der zweiten ROSC-Schaltung (230, 231, 240) indikativ sind.

5. Halbleiter-IC (200, 201) nach einem der Ansprüche 1-4, wobei die erste ROSC-Schaltung (220) einen Eingang aufweist, welcher gekoppelt ist, um einen elektrischen Strom von einem Ausgang eines ersten funktionsfähigen Transistors zu empfangen, und die zweite ROSC-Schaltung (230, 231, 240) einen Eingang aufweist, welcher gekoppelt ist, um einen elektrischen Strom von einem Ausgang eines zweiten funktionsfähigen Transistors zu empfangen.

6. Halbleiter-IC (200, 201) nach Anspruch 5, wobei der Eingang der ersten ROSC-Schaltung (220) durch einen Ausgang einer ersten Stromquelle bereitgestellt ist und der Eingang der zweiten ROSC-Schaltung (230, 231, 240) durch einen Ausgang einer zweiten Stromquelle bereitgestellt ist.

7. Halbleiter-IC (200, 201) nach Anspruch 6, wobei:

die erste Stromquelle einen ersten Unterschwellenwert-Vorspannungsgenerator (103) umfasst, welcher mit einem Steuerterminal des ersten funktionsfähigen Transistors gekoppelt ist und dazu eingerichtet ist, den ersten funktionsfähigen Transistor in einem Unterschwellenwertzustand unter Vorspannung zu setzen, wobei ein Ausgang des ersten funktionsfähigen Transistors den Ausgang der ersten Stromquelle bereitstellt; und
die zweite Stromquelle einen zweiten Unterschwellenwert-Vorspannungsgenerator (103) umfasst, welcher mit einem Steuerterminal des zweiten funktionsfähigen Transistors gekoppelt ist und dazu eingerichtet ist, den zweiten funktionsfähigen Transistor in einem Unterschwellenwertzustand unter Vorspannung zu setzen, wobei ein Ausgang des zweiten funktionsfähigen Transistors den Ausgang der zweiten Stromquelle bereitstellt.

8. Halbleiter-IC (200, 201) nach einem der Ansprüche 5-7, wobei der Eingang der ersten ROSC-Schaltung (220) wechselbar gekoppelt ist, um den elektrischen Strom von dem Ausgang des ersten funktionsfähigen Transistors zu empfangen, sodass der wenigstens eine Prozessor (250, 251, 260, 270, 274) dazu eingerichtet ist, zu bestimmen:

eine Referenzfrequenz, auf Grundlage der Oszillationsfrequenz der ersten ROSC-Schaltung (220), wenn der Eingang der ersten ROSC-Schaltung (220) den elektrischen Strom von dem Ausgang des ersten funktionsfähigen Transistors nicht empfängt, und
eine Sensor-Messfrequenz, auf Grundlage der Oszillationsfrequenz der ersten ROSC-Schaltung (220), wenn der Eingang der ersten ROSC-Schaltung (220) den elektrischen Strom von dem Ausgang des ersten funktionsfähigen Transistors empfängt.

9. Halbleiter-IC (200, 201) nach einem der Ansprüche 5-7, wobei der Eingang der zweiten ROSC-Schaltung (230, 231, 240) wechselbar gekoppelt ist, um den elektrischen Strom von dem Ausgang des zweiten funktionsfähigen Transistors zu empfangen, sodass der wenigstens eine Prozessor (250, 251, 260, 270, 274) dazu eingerichtet ist, zu bestimmen:

eine Referenzfrequenz, auf Grundlage der Oszillationsfrequenz der zweiten ROSC-Schaltung (230, 231, 240), wenn der Eingang der zweiten ROSC-Schaltung (230, 231, 240) den elektrischen Strom von dem Ausgang des zweiten funktionsfähigen Transistors nicht empfängt, und
eine Sensor-Messfrequenz, auf Grundlage der Oszillationsfrequenz der zweiten ROSC-Schaltung (230, 231, 240), wenn der Eingang der zweiten ROSC-Schaltung (230, 231, 240) den elektrischen Strom von dem Ausgang des zweiten funktionsfähigen Transistors empfängt.

**10.** Halbleiter-IC (200, 201) nach einem der Ansprüche 1-9, ferner umfassend:

Energiezuführanschlüsse, welche dazu eingerichtet sind, eine externe Energiezufuhr zu empfangen; und wobei der Halbleiter-Temperatursensor (210) mit den Energiezuführanschlüssen gekoppelt ist, um dem Halbleiter-Temperatursensor (210) Energie zuzuführen.

**11.** Halbleiter-IC (200, 201) nach einem der Ansprüche 1-10, ferner umfassend:

Kernspannung-(Vcc-Core)-Zuführleitungen zum Zuführen einer Kernspannung in der IC (200, 201); und wobei die erste ROSC-Schaltung (220) und die zweite ROSC-Schaltung (230, 231, 240) mit den Kernspannung-Zuführleitungen gekoppelt sind.

**12.** Halbleiter-IC (200, 201) nach einem der Ansprüche 1-11, wobei jede ROSC-Schaltung (220, 230, 231, 240) eine ungerade Anzahl an versetzten Invertern umfasst.


## Revendications

**1.** Circuit intégré à semi-conducteur, CI, (200, 201), comprenant :

un premier circuit oscillateur en anneau, ROSC, (220) et un second circuit ROSC (230, 231, 240) à des emplacements espacés dans le CI, (200, 201), chaque circuit ROSC (220, 230, 231, 240) présentant une fréquence d'oscillation respective en fonctionnement, qui varie avec la température ;
un capteur de température à semi-conducteur (210), situé dans le CI (200, 201) à proximité du premier circuit ROSC (220) et fournissant un signal de sortie de capteur indicatif d'une température ; et
au moins un processeur (250, 251, 260, 270, 274), configuré pour indiquer une température au niveau du second circuit ROSC (230, 231, 240) sur la base au moins : du signal de sortie de capteur, de la fréquence d'oscillation du second circuit ROSC (230, 231, 240) et de la fréquence d'oscillation du premier circuit ROSC (220) ;
dans lequel le au moins un processeur (250, 251, 260, 270, 274) est configuré pour indiquer la température au niveau du second circuit ROSC (230, 231, 240) au moins en : étalonnant une relation entre la température et la fréquence d'oscillation du second circuit ROSC (230, 231, 240) sur la base d'une relation entre une chute de tension locale (IR) et la fréquence d'oscillation du second circuit ROSC (230, 231, 240) ; et en étalonnant une relation entre la température et la fréquence d'oscillation du premier circuit ROSC (220), sur la base d'une relation entre une chute de tension locale (IR) et la fréquence d'oscillation du premier circuit ROSC (220).

**2.** Circuit intégré à semi-conducteur (200, 201) selon la revendication 1, dans lequel le au moins un processeur (250, 251, 260, 270, 274) est configuré pour indiquer la température au niveau du second circuit ROSC (230, 231, 240) au moins en étalonnant une relation entre la température et la fréquence d'oscillation du second circuit ROSC (230, 231, 240) sur la base d'une relation entre la température et la fréquence d'oscillation du premier circuit ROSC (220).

**3.** Circuit intégré à semi-conducteur (200, 201) selon la revendication 2, dans lequel le au moins un processeur (250, 251, 260, 270, 274) est en outre configuré pour indiquer la température au niveau du premier circuit ROSC (220) au moins en étalonnant une relation entre la température et la fréquence d'oscillation du premier circuit ROSC (220) sur la base d'une relation entre la température et le signal de sortie de capteur.

**4.** Circuit intégré à semi-conducteur (200, 201) selon la revendication 3, dans lequel le au moins un processeur (250, 251, 260, 270, 274) est en outre configuré pour stocker, dans le circuit intégré (200, 201) :

(a) des résultats de l'étalonnage de la relation entre la température et la fréquence d'oscillation du premier circuit ROSC (220) ; et
(b) des données qui indiquent une différence entre (a) et des résultats de l'étalonnage de la relation entre la température et la fréquence d'oscillation du second circuit ROSC (230, 231, 240).

**5.** Circuit intégré à semi-conducteur (200, 201) selon l'une quelconque des revendications 1 à 4, dans lequel le premier circuit ROSC (220) présente une entrée couplée pour recevoir un courant électrique à partir d'une sortie d'un premier transistor fonctionnel, et le second circuit ROSC (230, 231, 240) présente une entrée couplée pour recevoir un courant électrique à partir d'une sortie d'un second transistor fonctionnel.

**6.** Circuit intégré à semi-conducteur (200, 201) selon la revendication 5, dans lequel l'entrée vers le premier circuit ROSC (220) est fournie par une sortie d'une première source de courant, et l'entrée vers le second circuit ROSC (230, 231, 240) est fournie par une sortie d'une seconde source de courant.

**7.** Circuit intégré à semi-conducteur (200, 201) selon la revendication 6, dans lequel :

la première source de courant comprend un premier générateur de polarisation de sous-seuil (103) couplé à une borne de commande du premier transistor fonctionnel et configuré pour polariser le premier transistor fonctionnel dans un état de sous-seuil, une sortie du premier transistor fonctionnel fournissant la sortie de la première source de courant ; et
la seconde source de courant comprend un second générateur de polarisation de sous-seuil (103) couplé à une borne de commande du second transistor fonctionnel et configuré pour polariser le second transistor fonctionnel dans un état de sous-seuil, une sortie du second transistor fonctionnel fournissant la sortie de la seconde source de courant.

**8.** CI à semi-conducteur (200, 201) selon l'une quelconque des revendications 5 à 7, dans lequel l'entrée du premier circuit ROSC (220) est couplée de manière commutable pour recevoir le courant électrique depuis la sortie du premier transistor fonctionnel, de sorte que le au moins un processeur (250, 251, 260, 270, 274) est configuré pour déterminer :

une fréquence de référence basée sur la fréquence d'oscillation du premier circuit ROSC (220) lorsque l'entrée du premier circuit ROSC (220) ne reçoit pas le courant électrique depuis la sortie du premier transistor fonctionnel, et
une fréquence de mesure de capteur basée sur la fréquence d'oscillation du premier circuit ROSC (220) lorsque l'entrée du premier circuit ROSC (220) reçoit le courant électrique depuis la sortie du premier transistor fonctionnel.

**9.** CI à semi-conducteur (200, 201) selon l'une quelconque des revendications 5 à 7, dans lequel l'entrée du second circuit ROSC (230, 231, 240) est couplée de manière commutable pour recevoir le courant électrique depuis la sortie du second transistor fonctionnel, de sorte que le au moins un processeur (250, 251, 260, 270, 274) est configuré pour déterminer :

une fréquence de référence basée sur la fréquence d'oscillation du second circuit ROSC (230, 231, 240) lorsque l'entrée du second circuit ROSC (230, 231, 240) ne reçoit pas le courant électrique depuis la sortie du second transistor fonctionnel, et
une fréquence de mesure de capteur basée sur la fréquence d'oscillation du second circuit ROSC (230, 231, 240) lorsque l'entrée du second circuit ROSC (230, 231, 240) reçoit le courant électrique depuis la sortie du second transistor fonctionnel.

**10.** CI à semi-conducteur (200, 201) selon l'une quelconque des revendications 1 à 9, comprenant en outre :

des ports d'alimentation électrique, configurés pour recevoir une alimentation électrique externe ; et
dans lequel le capteur de température à semi-conducteur (210) est couplé aux ports d'alimentation électrique pour alimenter le capteur de température à semi-conducteur (210).

**11.** CI à semi-conducteur (200, 201) selon l'une quelconque des revendications 1 à 10, comprenant en outre :

des lignes d'alimentation de tension de noyau ($V_{CC}$ noyau) pour fournir une tension de noyau dans le CI (200, 201) ; et
dans lequel le premier circuit ROSC (220) et le second circuit ROSC (230, 231, 240) sont couplés aux lignes d'alimentation de tension de noyau.

**12.** CI à semi-conducteur (200, 201) selon l'une quelconque des revendications 1 à 11, dans lequel chaque circuit ROSC (220, 230, 231, 240) comprend un nombre impair d'inverseurs asymétriques.

FIGURE 1

MICROPROCESSOR

$I_E$ ↓

SUBSTRATE PNP
TRANSISTOR

$I_B$ →

$I_C = \left(\dfrac{\beta}{\beta+1}\right) \times I_E$ ↓

_160_

_170_

SUBSTRATE GROUND

_150_

_180_

TEMPERATURE
SENSOR

# FIGURE 2
## (PRIOR ART)

INTEGRATED CIRCUIT

**200**

**240**
LTS

*271*

**210**
DTS

**220**
LTS

**270**
CONTROLLER

*272*

**290**
I²C/JTAG

**230**
LTS

*273*

**250**
CONTROLLER

*255*

**260**
CONTROLLER

*265*

**275**
I/O BUS

**280**

ANALYTICAL PLATFORM

# FIGURE 3

FIGURE 4

EP 4 004 509 B1

FIGURE 5

FIGURE 6

FIGURE 7

FIGURE 8

_300_

**302**

CALIBRATE LTS BASED ON
PROXIMATE DTS

**304**

CALIBRATE LTS-OF-INTEREST
BASED ON LTS PROXIMATE
DTS

**306**

READ TEMPERATURE AT LTS-
OF-INTEREST

# FIGURE 9

*402*

### LEAK-MODE CAL

LEAK_Tcyc_T1_V1
LEAK_Tcyc_T1_V2
LEAK_Tcyc_T2_V1
LEAK_Tcyc_T2_V2

V1
V2

T1    T2

*404*

### REF-MODE CAL

REF_Tcyc_T1_V1
REF_Tcyc_T2_V1
REF_Tcyc_T1_V2
REF_Tcyc_T2_V2

T1

REF_Tcyc_T2_V1
REF_Tcyc_T2_V2  ⎤— REF CAL data @ T2

V(T) curve factor from Simulation

*406*

LEAK CAL data @ T2 ⎡ LEAK_Tcyc_T1_V1
LEAK_Tcyc_T1_V2
LEAK_Tcyc_T2_V1
⎣ LEAK_Tcyc_T2_V2

REF mode @ T = T2

REF_Tcyc_T2_V1
*REF_Tcyc_Tx_Vx
REF_Tcyc_T2_V2

V1    Vx  Vx'  V2

* REF mode measurement

Vx (1st iteration)
Vx' (2nd iteration)

*408*

### LEAK-MODE

ln(LEAK_Tcyc_V1_T1)
ln(LEAK_Tcyc_V1_T2)
ln(LEAK_Tcyc_Vx_T1)
ln(LEAK_Tcyc_V1_T1)
ln(LEAK_Tcyc_Vx_T2)
ln(LEAK_Tcyc_V2_T2)

B
A

V1    Vx

Use Vx' instead of Vx
at 2nd iteration

Tx (for 2nd iteration)

ln(LEAK_Tcyc_Vx_T1)
ln(LEAK_Tcyc_Vx_T2)  ⎤— 1st iteration

ln(LEAK_Tcyc_Vx'_T1)
ln(LEAK_Tcyc_Vx'_T2)  ⎤— 2nd iteration

## FIGURE 10A

410

LEAK-MODE

$V = Vx$

$EXP(ln(LEAK\_Tcyc\_Vx\_T1))$

$*LEAK\_Tcyc\_Vx\_Tx$

$EXP(ln(LEAK\_Tcyc\_Vx\_T2))$

T1　　Tx

* Leakage mode measurement

Use Vx' instead of Vx
at 2nd iteration

Tx

Tx (for 2nd iteration)

Tx (after 2nd iteration)

DTS data

−

DTS-LTS temperature
compensation factor

FIGURE 10B

**EP 4 004 509 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62879625
- US 2017199089 A1
- US 7455450 B2
- IL 2019050039 W